Europäisches Patentamt

(19) European Patent Office

Office européen des brevets

(11) EP 0 749 611 B1

(12) **EUROPEAN PATENT SPECIFICATION**

(45) Date of publication and mention
of the grant of the patent:
**19.06.2002 Bulletin 2002/25**

(21) Application number: **95913629.2**

(22) Date of filing: **08.03.1995**

(51) Int Cl.⁷: **G06K 9/00**, G06K 7/10,
G07D 7/00

(86) International application number:
**PCT/US95/02992**

(87) International publication number:
**WO 95/24691 (14.09.1995 Gazette 1995/39)**

(54) **METHOD AND APPARATUS FOR DISCRIMINATING AND COUNTING DOCUMENTS**

VERFAHREN UND APPARAT ZUM UNTERSCHREIBEN UND ZÄHLEN VON DOKUMENTEN

PROCEDE ET APPAREIL POUR IDENTIFIER ET COMPTER DES DOCUMENTS

(84) Designated Contracting States:
**BE DE FR GB IT NL**

(30) Priority: **08.03.1994 US 207592**
**29.03.1994 US 219093**
**12.04.1994 US 226660**
**16.05.1994 US 243807**
**09.08.1994 US 287882**
**04.10.1994 US 317349**
**14.11.1994 US 340031**
**22.12.1994 US 362848**
**27.02.1995 US 394752**
**07.03.1995 US 399854**

(43) Date of publication of application:
**27.12.1996 Bulletin 1996/52**

(60) Divisional application:
**97113399.6 / 0 805 408**
**97113395.4 / 0 807 904**
**97113396.2 / 0 807 905**
**97113397.0 / 0 807 906**
**98114333.2 / 0 875 866**
**00108481.3 / 1 022 694**
**01106346.8 / 1 107 167**
**01121615.7 / 1 158 469**
**01129428.7 / 1 202 224**
**01129427.9 / 1 209 632**

(73) Proprietor: **CUMMINS-ALLISON CORPORATION**
**Mount Prospect, Illinois 60056 (US)**

(72) Inventors:
• **GRAVES, Bradford T.**
**Arlington Heights, IL 60004 (US)**
• **MAZUR, Richard A.**
**Naperville, IL 60540 (US)**
• **MENNIE, Douglas U.**
**Barrington, IL 60010 (US)**
• **JONES, William J.**
**Kenilworth, IL 60043 (US)**
• **RATERMAN, Donald E.**
**Deerfiled, IL 60015 (US)**
• **STROMME, Lars R.**
**Arlington Heights, IL 60004 (US)**
• **BAUCH, Aron M.**
**East Setauket, NY 11733 (US)**
• **CSULITS, Frank M.**
**Gurnee, IL 60031 (US)**
• **JONES, John E.**
**Winnetka, IL 60043 (US)**
• **SCHREITER, Heinz W.**
**Skokie, IL 60076 (US)**
• **MUNRO, Mark C.**
**Park Ridge, IL 60068 (US)**

(74) Representative: **Grünecker, Kinkeldey,**
**Stockmair & Schwanhäusser Anwaltssozietät**
**Maximilianstrasse 58**
**80538 München (DE)**

(56) References cited:
**WO-A-90/07165**     **WO-A-92/17394**
**US-A- 4 250 806**     **US-A- 4 356 473**
**US-A- 4 539 702**     **US-A- 4 563 771**
**US-A- 4 653 647**     **US-A- 5 295 196**

Remarks:
Divisional application 97113399.6 filed on 04/08/97.

**Description**

Field of the Invention

The present invention relates, in general, to document identification and more specifically to an apparatus and method for currency discrimination.

Background of the Invention

Machines that are currently available for simultaneous scanning and counting of documents such as paper currency are relatively complex and costly, and relatively large in size. The complexity of such machines can also lead to excessive service and maintenance requirements.. These drawbacks have inhibited more widespread use of such machines, particularly banks and other financial institutions where space is limited in areas where the machines are most needed, such as teller areas. The above drawbacks are particularly difficult to overcome in machines which offer much-needed features such as the ability to authenticate genuineness and/or denomination of the bills.

From WO 90/07165 a counterfeit detection apparatus for bank notes and other valuable documents is disclosed comprising a power supply connected to a UV lamp and a metallized thread detector formed by a pair of metallic rollers which roll across a bank note to detect the conductivity of a metallized thread in the bank note. A drive from the rollers rotates an encoder disk, the rotational movement being monitored by a pair of photodiodes. The apparatus includes means for detecting the amount of UV absorption and electromechanical means for autoreferencing the lamps intensity. Displays are provided to give a visual or audible verification of the authenticity of the bank note.

WO 92/17394 describes a feed arrangement for use with a currency handling apparatus in which cooperating action of an actively driven drum roller and a corresponding passively driven picker roller is used for feeding bills stacked in an input bin along a bill transport path. There is no disclosure on any means how the authenticity of bills is determined.

From US-A-4,250,806 a document processor for transporting documents through a path is known in which flaws on the documents are detected by electronically scanning each side of the document, selectable indicia are printed only on unflawed documents, and the flawed and unflawed documents are sorted and stored separately. The electronically scanned information is compared with a master document stored in a computer memory. As a result of this comparison, outputs are provided from the computer which are indicative of a favorable or unfavorable comparison for controlling the printing and sorting functions.

US-A-5,295,196 describes a method and apparatus for discriminating between currency bills of different denominations using an optical sensing and correlation technique based on the sensing of bill reflectance characteristics obtained by illuminating and scanning a bill along it's narrow dimension. A series of detected reflectance signals are obtained by sampling and digitally processing the reflected light of a plurality of predefined sample points as a currency bill is moved across an illuminated strip with its narrow dimension parallel to the direction of transport of the bill. The sample data is subjected to digital processing, whereby the reflectance data represents a characteristic pattern that is unique for a given bill denomination and incorporates sufficient distinguishing features between characteristic patterns for discriminating between different currency denominations. A plurality of master characteristic patterns are generated and stored using original bills for each denomination of currency to be detected. The pattern generated by scanning a bill under test and processing the data samples is compared with each of the prestored master patterns to generate, for each comparison, a correlation number representing the extent of similarity between corresponding ones of the plurality of data samples for the compared patterns. Denomination identification is based on designating the scanned bill as belonging to the denomination corresponding to the stored master pattern for which the correlation number resulting from the pattern comparison is determined to be the highest. The currency denomination of the bill is scanned, identified and counted at a rate in excess of 800 bills per minute.

US-A-4,653,647 discloses a storing and stacking apparatus for currency notes comprising a currency note inspecting section for inspecting the denomination of a currency not, a normal note, a damaged note, an obverse-presented note and a reverse-presented note. The currency notes of a predetermined denomination among the currency notes fed by the feeding section are fed to a first stacking section having first and second pockets while currency notes of other denominations are fed to the second stacking section. The document does not provide information on how genuineness of bills is checked.

A variety of techniques and apparatus have been used to satisfy the requirements of automated currency handling systems. At the lower end of sophistication in this area of technology are systems capable of handling only a specific type of currency, such as a specific dollar denomination, while rejecting all other currency types. At the upper end are complex systems which are capable of identifying and discriminating among and automatically counting multiple currency denominations.

Currency discrimination systems typically employ either magnetic sensing or optical sensing for discriminating among different currency denominations. Magnetic sensing is based on detecting the presence or absence of magnetic ink in portions of the printed indicia on the currency by using magnetic sensors, usually ferrite core-based sensors, and using the detected magnetic signals, after undergoing analog or digital processing, as the basis for currency discrimination. A variety of currency characteristics can be measured using magnetic sensing. These include detection of patterns of changes in magnetic flux, patterns of vertical grid lines in the portrait area of bills, the presence of a security thread, total amount of magnetizable material of a bill, patterns from sensing the strength of magnetic fields along a bill, and other patterns and counts from scanning different portions of the bill such as the area in which the denomination is written out.

The more commonly used optical sensing techniques, on the other hand, are based on detecting and analyzing variations in light reflectance or transmissivity characteristics occurring when a currency bill is illuminated and scanned by a strip of focused light. The subsequent currency discrimination is based on the comparison of sensed optical characteristics with prestored parameters for different currency denominations, while accounting for adequate tolerances reflecting differences among individual bills of a given denomination. A variety of currency characteristics can be measured using optical sensing. These include detection of a bill's density, color, length and thickness, the presence of a security thread and holes, and other patterns of reflectance and transmission. Color detection techniques may employ color filters, colored lamps, and/or dichroic beamsplitters.

In addition to magnetic and optical sensing, other techniques of detecting characteristic information of currency include electrical conductivity sensing, capacitive sensing (such as for watermarks, security threads, thickness, and various dielectric properties) and mechanical sensing (such as for size, limpness, and thickness).

A major obstacle in implementing automated currency discrimination systems is obtaining an optimum compromise between the criteria used to adequately define the characteristic pattern for a particular currency denomination, the time required to analyze test data and compare it to predefined parameters in order to identify the currency bill under scrutiny, and the rate at which successive currency bills may be mechanically fed through and scanned. Even with the use of microprocessors for processing the test data resulting from the scanning of a bill, a finite amount of time is required for acquiring samples and for the process of comparing the test data to stored parameters to identify the denomination of the bill.

Some of the currency scanning systems today scan for two or more characteristics of bills to discriminate among various denominations or to authenticate their genuineness. However, these systems do not efficiently utilize the information which is obtained. Rather, these systems generally conduct comparison based on the two or more characteristics independently of each other. As a result, the time required to make these comparisons is increased which in turn can reduce the operating speed of the entire scanning system.

Recent currency discriminating systems rely on comparisons between a scanned pattern obtained from a subject bill and sets of stored master patterns for the various denominations among which the system is designed to discriminate. As a result, the master patterns which are stored play an important role in a discrimination system's ability to discriminate among bills of various denominations as well as between genuine bills and counterfeit bills. These master patterns have been generated by scanning bills of various denominations known to be genuine and storing the resulting patterns. However, a pattern generated by scanning a genuine bill of a given denomination can vary depending upon a number of factors such as the condition of the bill, e.g., whether it is a crisp bill in new condition or a worn, flimsy bill, as well as year in which the bill was printed, e.g., before or after security threads were incorporated into bills of some denominations. Likewise, it has been found that bills which have experienced a high degree of usage may shrink, resulting in a reduction of the dimensions of such bills. Such shrinkage may likewise result in variations in scanning patterns. As a result, if, for example, a $20 master pattern is generated by scanning a crisp, genuine $20 bill, the discrimination system may reject an unacceptable number of genuine but worn $20 bills. Likewise, if a $20 master pattern is generated using a very worn, genuine $20 bill, the discrimination system may reject an unacceptable number of genuine but crisp $20 bills.

It has been found that scanning U.S. bills of different denominations along a central portion thereof provides scanning patterns sufficiently divergent to enable accurate discrimination between different denominations. Such a discrimination device is disclosed in US-A- 5,295,196 mentioned above. However, currencies of other countries can differ from U.S. currency and from each other in a number of ways. For example, while all denominations of U.S. currencies are the same size, in many other countries currencies vary in size by denomination. Furthermore, there is a wide variety of bill sizes among different countries. In addition to size, the color of currency can vary by country and by denomination. Likewise, many other characteristics may vary between bills from different countries and of different denominations.

As a result of the wide variety of currencies used throughout the world, a discrimination system designed to handle bills of one country generally can not handle bills from another country. Likewise, the method of discriminating bills of different denominations of one country may not be appropriate for use in discriminating bills of different denominations of another country. For example, scanning for a given characteristic pattern along a certain portion of bills of one country, such as optical reflectance about the central portion of U.S. bills, may not provide optimal discrimination properties for bills of another country, such as German marks.

Furthermore, there is a distinct need for an identification system which is capable of accepting bills of a number of currency systems, that is, a system capable of accepting a number of bill-types. For example, a bank in Europe may need to process on a regular basis French, British, German, Dutch, etc. currency, each having a number of different denomination values.

Some of the optical scanning systems available today employ two optical scanheads disposed on opposite sides of a bill transport path. One of the optical scanheads scans one surface (e.g., green surface) of a currency bill to obtain a first set of reflectance data samples, while the other optical scanhead scans the opposite surface (e.g., black surface) of the currency bill to obtain a second set of reflectance data samples. These two sets of data samples are then processed and compared to stored characteristic patterns corresponding to the green surfaces of currency bills of different denominations. If degree of correlation between either set of data samples and any of the stored characteristic patterns is greater than a predetermined threshold, then the denomination of the bill is positively identified.

A drawback of the foregoing technique for scanning both surfaces of a currency bill is that it is time-consuming to process and compare both sets of data samples for the scanned bill to the stored characteristic patterns. The set of data samples corresponding to the black surface of the scanned bill are processed and compared to the stored characteristic patterns even though no match should be found. As previously stated, the stored characteristic patterns correspond to the green surfaces of currency bills of different denominations.

Another drawback of the foregoing scanning technique is that the set of data samples corresponding to the black surface of the scanned bill occasionally leads to false positive identification of a scanned bill. The reason for this false positive identification is that if a scanned bill is slightly shifted in the lateral direction relative to the bill transport path, the set of data samples corresponding to the black surface of the scanned bill may sufficiently correlate with one of the stored characteristic patterns to cause a false positive identification of the bill. The degree of correlation between the set of "black" data samples and the stored "green" characteristic patterns should, of course, not be greater than the predetermined threshold for positively identifying the denomination of the bill.

Furthermore, in currency discriminating systems that rely on comparisons between a scanned pattern obtained from a subject bill and sets of stored master patterns, the ability of a system to accurately line up the scanned patterns to the master patterns to which they are being compared is important to the ability of a discrimination system to discriminate among bills of various denominations as well as between genuine bills and counterfeit bills without rejecting an unacceptable number of genuine bills. However, the ability of a system to line up scanned and master patterns is often hampered by the improper initiation of the scanning process which results in the generation of scanned patterns. If the generation of scanned patterns is initiated too early or too late, the resulting pattern will not correlate well with the master pattern associated with the identity of the currency; and as a result, a genuine bill may be rejected. There are a number of reasons why a discrimination system may initiate the generation of a scanned pattern too early or too late, for example, stray marks on a bill, the bleeding through of printed indicia from one bill in a stack onto an adjacent bill, the misdetection of the beginning of the area of the printed indicia which is desired to be scanned, and the reliance on the detection of the edge of a bill as the trigger for the scanning process coupled with the variance, from bill to bill, of the location of printed indicia relative to the edge of a bill. Therefore, there is a need to overcome the problems associated with correlating scanned and master patterns.

In some currency discriminators bills are transported, one at a time, passed a discriminating unit. As the bills pass the discriminating unit, the denomination of each bill is determined and a running total of each particular currency denomination and/or of the total value of the bills that are processed is maintained. A number of discriminating techniques may be employed by the discriminating unit including optical or magnetic scanning of bills. A plurality of output bins are provided and the discriminator includes means for sorting bills into the plurality of bins. For example, a discriminator may be designed to recognize a number of different denominations of U.S. bills and comprise an equal number of output bins, one associated with each denomination. These discriminators also include a reject bin for receiving all bills which cannot be identified by the discriminating unit. These bills may later be examined by an operator and then either re-fed through the discriminator or set aside as unacceptable.

Depending on the design of a discriminator, bills may be transported and scanned either along their long dimension or their narrow dimension. For a discriminator that transport bills in their narrow dimension, it is possible that a given bill may be oriented either face up or face down and either top edge first ("forward" direction) or top edge last ("reverse" direction). For discriminators that transport bills in their long dimension, it is possible that a given bill may be oriented either face up or face down and either left edge first ("forward" direction) or left edge last ("reverse" direction). The manner in which a bill must be oriented as it passes a discriminating unit depends on the characteristics of the discriminator. Some discriminators are capable of identifying the denomination of a bill only if it is fed with a precise orientation, e.g., face up and top edge first. Other discriminators are capable of identifying bills provided they are "faced" (i.e., fed with a predetermined face orientation, that is all face up or all face down). For example, such a discriminator may be able to identify a bill fed face up regardless of whether the top edge is fed first or last. Other discriminators are capable of identifying the denomination fed with any orientation. However, whether a given discriminator can discriminate between bills fed with different orientations depends on the discriminating method used. For example, a discriminator that discriminates bills based on patterns of transmitted light may be able to identify the denomination of a forward fed bill regardless of whether the bill is fed face up or face down, but the same discriminator would not be able to discriminate between a bill fed face up and a bill fed face down.

Summary of the Invention

It is the object of the present invention to provide an improved apparatus and method for currency discrimination.

This object is obtained by the features of claims 1 and 10, respectively, preferred embodiments of the respective dependent claims.

In the invention, a series of master characteristic patterns are generated and stored using standard bills for each denomination of currency that is to be detected. The "standard" bills used to generate the master characteristic patterns are preferably bills that are slightly used bills. According to a preferred embodiment, two or four characteristic patterns are generated and stored within a system memory for each detectable bill-type. The stored patterns correspond, respectively, to optical scans performed on one or both sides of a bill along "forward" and "reverse" directions relative to the pattern printed on the bill. For bills which produce significant pattern changes when shifted slightly to the left or right, such as the $10 bill in U.S. currency, it is preferred to store two patterns for each of the "forward" and "reverse" directions, each pair of patterns for the same direction represent two scan areas that are slightly displaced from each other along the lateral dimension of the bill. Preferably, the document identification system of this invention is adapted to identify different denominations of a plurality of currency systems. Accordingly, a master set of different characteristic patterns is stored within the system memory for subsequent correlation purposes.

According to the invention, the apparatus for currency discrimination comprises first and second stationary scanheads, disposed on opposite sides of a bill transport path, for scanning respective first and second opposing surfaces of a bill traveling along the bill transport path and for producing respective output signals. The bill travels along the transport path in the direction of a predetermined dimension of the bill. A memory stores master characteristic patterns corresponding to associated predetermined surfaces (e.g., green surfaces) of a plurality of denominations of genuine bills. Sampling circuitry samples the output signals associated with the respective first and second opposing surfaces of the scanned bill. A signal processor is programmed to determine which one of the first and second opposing surfaces corresponds to the associated predetermined surfaces of the plurality of denominations of genuine bills. According to a preferred embodiment adapted for discriminating, for example, U.S. bills, the determination as to which surface of a bill corresponds to a predetermined surface is made by detecting the borderlines on each side of a bill and determining the relative times of detection of each borderline. The processor then correlates the output signal associated with the one of the first and second opposing surfaces corresponding to the associated predetermined surfaces with the master characteristic patterns. If the degree of correlation between the selected output signal and any of the stored characteristic patterns is greater than a predetermined threshold, then the denomination of the bill is positively identified.

Brief Description Of The Drawings

FIG. 1 is a perspective view of a currency scanning and counting machine embodying the present invention;
FIG. 2 is a functional block diagram of the currency scanning and counting machine of FIG. 1 illustrating a scanhead arranged on each side of a transport path;
FIG. 3 is a diagrammatic perspective illustration of the successive areas scanned during the traversing movement of a single bill across an optical sensor according to a preferred embodiment of the present invention;
FIGs. 4a and 4b are perspective views of a bill and a preferred area to be optically scanned on the bill;
FIGs. 5a and 5b are diagrammatic side elevation views of the scan area to be optically scanned on a bill according to preferred embodiments of the present invention;
FIG. 6a is a perspective view of a bill showing the preferred area of a first surface to be scanned by one of the two scanheads employed in the preferred embodiment of the present invention;
FIG. 6b is another perspective view of the bill in FIG. 6a showing the preferred area of a second surface to be scanned by the other of the scanheads employed in the preferred embodiment of the present invention;
FIG. 6c is a side elevation showing the first surface of a bill scanned by an upper scanhead and the second surface of the bill scanned by a lower scanhead;
FIG. 6d is a side elevation showing the first surface of a bill scanned by a lower scanhead and the second surface of the bill scanned by an upper scanhead;

FIGs. 7 and 8 form a block diagram illustrating a preferred circuit arrangement for processing and correlating reflectance data according to the optical sensing and counting technique of this invention;

FIG. 9 is a flow chart illustrating the sequential procedure involved in detecting the presence of a bill adjacent the lower scanhead and the borderline on the side of the bill adjacent to the lower scanhead;

FIG. 10 is a flow chart illustrating the sequential procedure involved in detecting the presence of a bill adjacent the upper scanhead and the borderline on the side of the bill adjacent to the upper scanhead;

FIG. 11a is a flow chart illustrating the sequential procedure involved in the analog-to-digital conversion routine associated with the lower scanhead;

FIG. 11b is a flow chart illustrating the sequential procedure involved in the analog-to-digital conversion routine associated with the upper scanhead;

FIG. 12 is a flow chart illustrating the sequential procedure involved in determining which scanhead is scanning the green side of a U.S. currency bill;

FIG. 13 is a flow chart illustrating the sequence of operations involved in determining the bill denomination from the correlation results;

FIG. 14 is a flow chart illustrating the sequential procedure involved in decelerating and stopping the bill transport system in the event of an error;

FIG. 15a is a graphical illustration of representative characteristic patterns generated by narrow dimension optical scanning of a $1 currency bill in the forward direction;

FIG. 15b is a graphical illustration of representative characteristic patterns generated by narrow dimension optical scanning of a $2 currency bill in the reverse direction;

FIG. 15c is a graphical illustration of representative characteristic patterns generated by narrow dimension optical scanning of a $100 currency bill in the forward direction;

FIG. 16a is an enlarged vertical section taken approximately through the center of the machine, but showing the various transport rolls in side elevation;

FIG. 16b is a top plan view of the interior mechanism of the machine of FIG. 1 for transporting bills across the optical scanheads, and also showing the stacking wheels at the front of the machine;

FIG. 17a is an enlarged perspective view of the bill transport mechanism which receives bills from the stripping wheels in the machine of FIG. 1;

FIG. 17b is a cross-sectional view of the bill transport mechanism depicted in FIG. 17a along line 21b;

FIG. 18 is a side elevation of the machine of FIG. 1, with the side panel of the housing removed;

FIG. 19 is an enlarged bottom plan view of the lower support member in the machine of FIG. 1 and the passive transport rolls mounted on that member;

FIG. 20 is a sectional view taken across the center of the bottom support member of FIG. 19 across the narrow dimension thereof;

FIG. 21 is an end elevation of the upper support member which includes the upper scanhead in the machine of FIG. 1, and the sectional view of the lower support member mounted beneath the upper support member;

FIG. 22 is a section taken through the centers of both the upper and lower support members, along the long dimension of the lower support member shown in FIG. 19;

FIG. 23 is a top plan view of the upper support member which includes the upper scanhead;

FIG. 24 is a bottom plan view of the upper support member which includes the upper scanhead;

FIG. 25 is an illustration of the light distribution produced about one of the optical scanheads;

FIGs. 26a and 26b are diagrammatic illustrations of the location of two auxiliary photo sensors relative to a bill passed thereover by the transport and scanning mechanism shown in FIGs. 16a-24;

FIG. 27 is a top view of a bill and size determining sensors according to a preferred embodiment of the present invention;

FIG. 28 is a top view of a bill illustrating multiple areas to be optically scanned on a bill according to a preferred embodiment of the present invention;

FIG. 29a is a graph illustrating a scanned pattern which is offset from a corresponding master pattern;

FIG. 29b is a graph illustrating the same patterns of FIG. 41a after the scanned pattern is shifted relative to the master pattern;

FIG. 30 is a side elevation of a multiple scanhead arrangement according to a preferred embodiment of the present invention;

FIG. 31 is a side elevation of a multiple scanhead arrangement according to another preferred embodiment of the present invention;

## Detailed Description Of The Preferred Embodiments

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the spirit and scope of the invention as defined by the appended claims.

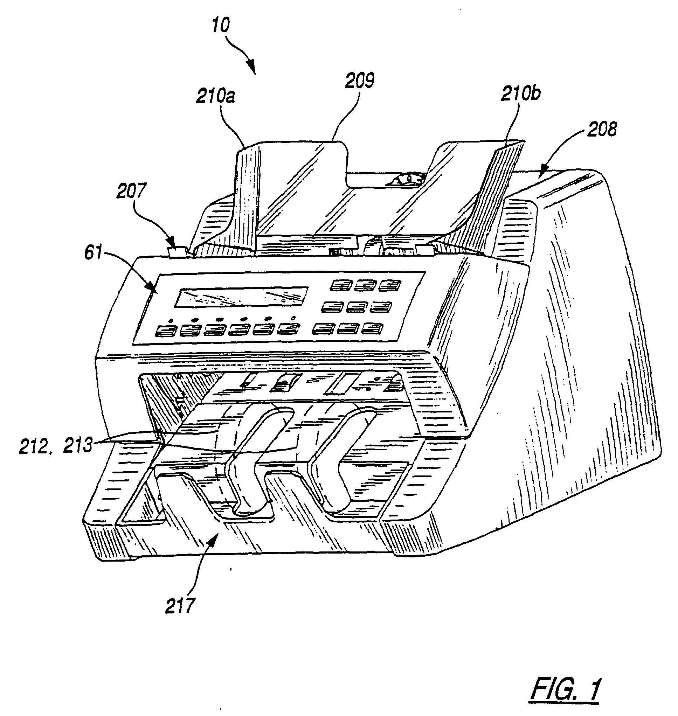

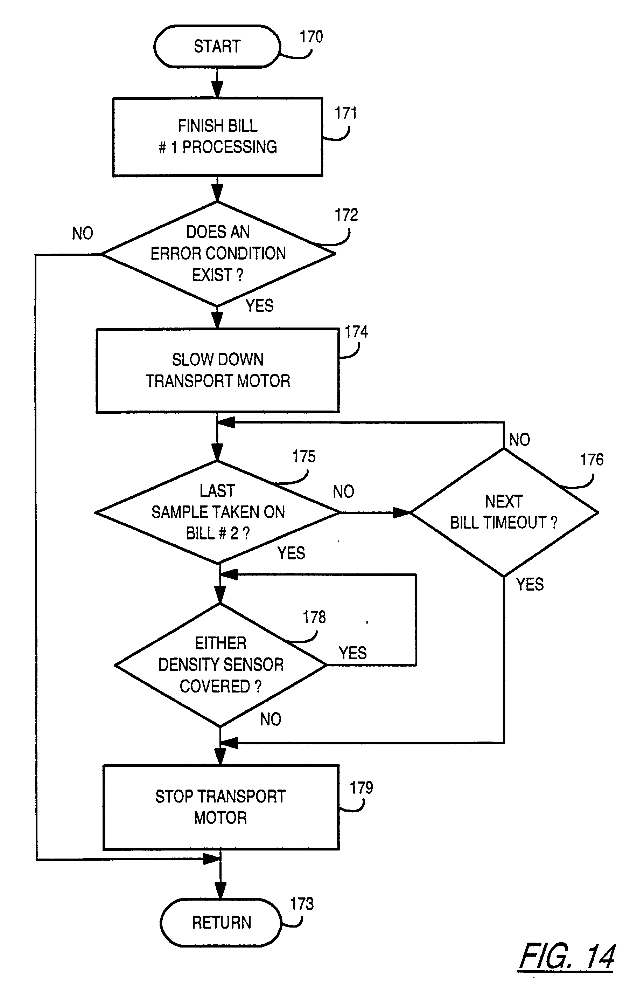

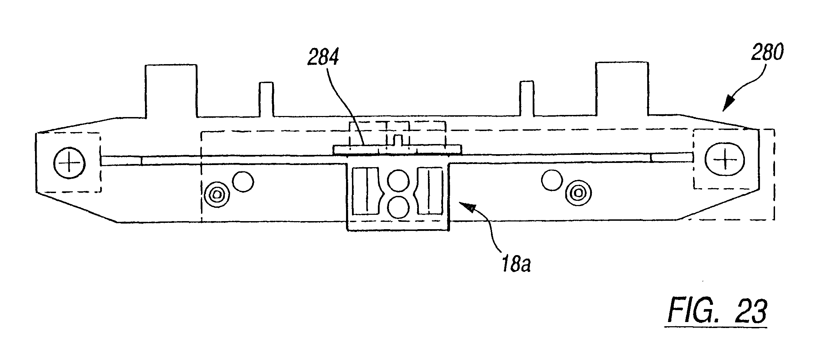

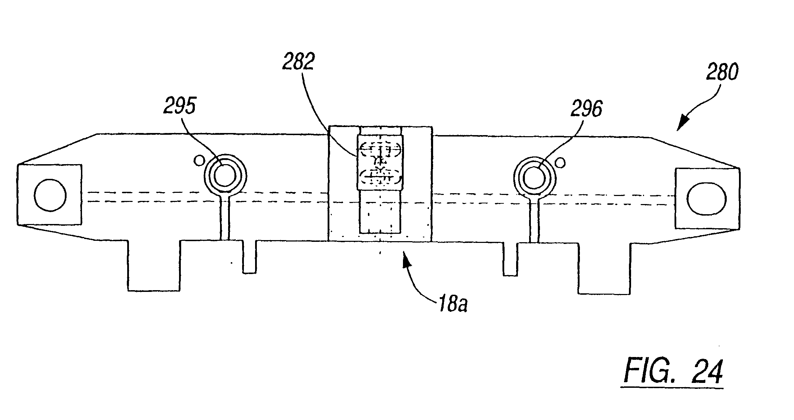

According to a preferred embodiment of the present invention, a currency discrimination system adapted to U.S. currency is described in connection with, for example, FIGs. 1-31. Subsequently, modifications to such a discrimination system will be described in obtaining a currency discrimination system in accordance with other preferred embodiments of the present invention, such a currency discriminator systems having multiple scanheads per side. Furthermore, while the preferred embodiments below entail the scanning of currency bills, the system of the present invention is applicable to other documents as well. For example, the system of the present invention may be employed in conjunction with stock certificates, bonds, and postage and food stamps.

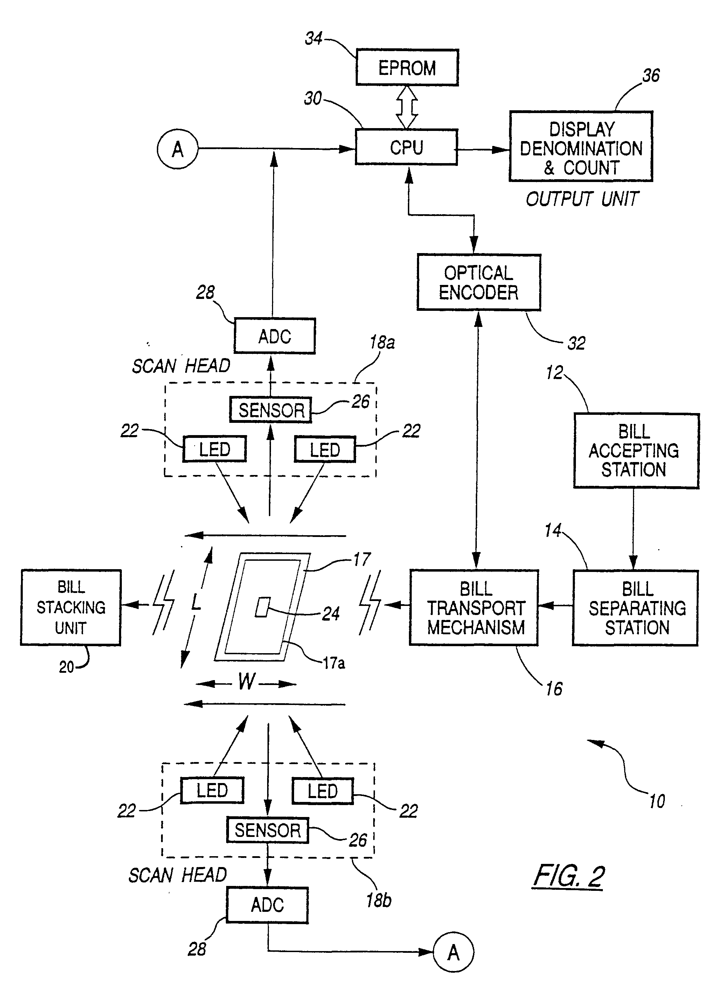

Referring now to FIGs. 1 and 2, there is shown a preferred embodiment of a currency scanning and counting machine 10 according to the present invention. The machine 10 includes an input receptacle or bill accepting station 12 where stacks of currency bills that need to be identified and counted are positioned. Bills in the input receptacle are acted upon by a bill separating station 14 which functions to pick out or separate one bill at a time for being sequentially relayed by a bill transport mechanism 16 (FIG. 2), according to a precisely predetermined transport path, between a pair of scanheads 18a, 18b where the currency denomination of the bill is scanned and identified. In the preferred embodiment, bills are scanned and identified at a rate in excess of 800 bills per minute. In the preferred embodiment depicted, each scanhead 18a, 18b is an optical scanhead that scans for characteristic information from a scanned bill 17 which is used to identify the denomination of the bill. The scanned bill 17 is then transported to an output receptacle or bill stacking station 20 where bills so processed are stacked for subsequent removal.

Each optical scanhead 18a, 18b preferably comprises a pair of light sources 22 directing light onto the bill transport path so as to illuminate a substantially rectangular light strip 24 upon a currency bill 17 positioned on the transport path adjacent the scanhead 18. Light reflected off the illuminated strip 24 is sensed by a photodetector 26 positioned between the two light sources. The analog output of the photodetector 26 is converted into a digital signal by means of an analog-to-digital (ADC) convertor unit 28 whose output is fed as a digital input to a central processing unit (CPU) 30.

While scanheads 18a, 18b of FIG. 2 are optical scanheads, it should be understood that it may be designed to detect a variety of characteristic information from currency bills. Additionally, the scanhead may employ a variety of detection means such as magnetic, optical, electrical conductivity, and capacitive sensors.

Referring again to FIG. 2, the bill transport path is defined in such a way that the transport mechanism 16 moves currency bills with the narrow dimension of the bills being parallel to the transport path and the scan direction. Alternatively, the system 10 may be designed to scan bills along their long dimension or along a skewed dimension. As a bill 17 traverses the scanheads 18a, 18b, the coherent light strip 24 effectively scans the bill across the narrow dimension of the bill. In the preferred embodiment depicted, the transport path is so arranged that a currency bill 17 is scanned across a central section of the bill along its narrow dimension, as shown in FIG. 2. Each scanhead functions to detect light reflected from the bill as it moves across the illuminated light strip 24 and to provide an analog representation of the variation in reflected light, which, in turn, represents the variation in the dark and light content of the printed pattern or indicia on the surface of the bill. This variation in light reflected from the narrow dimension scanning of the bills serves as a measure for distinguishing, with a high degree of confidence, among a plurality of currency denominations which the system is programmed to handle.

A series of such detected reflectance signals are obtained across the narrow dimension of the bill, or across a selected segment thereof, and the resulting analog signals are digitized under control of the CPU 30 to yield a fixed number of digital reflectance data samples. The data samples are then subjected to a normalizing routine for processing the sampled data for improved correlation and for smoothing out variations due to "contrast" fluctuations in the printed pattern existing on the bill surface. The normalized reflectance data represents a characteristic pattern that is unique for a given bill denomination and provides sufficient distinguishing features among characteristic patterns for different currency denominations.

In order to ensure strict correspondence between reflectance samples obtained by narrow dimension scanning of successive bills, the reflectance sampling process is preferably controlled through the CPU 30 by means of an optical encoder 32 which is linked to the bill transport mechanism 16 and precisely tracks the physical movement of the bill 17 between the scanheads 18a, 18b. More specifically, the optical encoder 32 is linked to the rotary motion of the drive motor which generates the movement imparted to the bill along the transport path. In addition, the mechanics of the feed mechanism ensure that positive contact is maintained between the bill and the transport path, particularly when the bill is being scanned by the scanheads. Under these conditions, the optical encoder 32 is capable of precisely tracking the movement of the bill 17 relative to the light strips 24 generated by the scanheads 18a, 18b by monitoring the rotary motion of the drive motor.

The outputs of the photodetectors 26 are monitored by the CPU 30 to initially detect the presence of the bill adjacent the scanheads and, subsequently, to detect the starting point of the printed pattern on the bill, as represented by the thin borderline 17a which typically encloses the printed indicia on currency bills. Once the borderline 17a has been detected, the optical encoder 32 is used to control the timing and number of reflectance samples that are obtained from the outputs of the photodetectors 26 as the bill 17 moves across the scanheads.

According to one preferred embodiment, the detection of the borderline 17a constitutes an important step and realizes improved discrimination efficiency in systems designed to accommodate U.S. currency since the borderline 17a serves as an absolute reference point for initiation of sampling. If the edge of a bill were to be used as a reference point, relative displacement of sampling points can occur because of the random manner in which the distance from the edge to the borderline 17a varies from bill to bill due to the relatively large range of tolerances permitted during printing and cutting of currency bills. As a result, it becomes difficult to establish direct correspondence between sample points in successive bill scans and the discrimination efficiency is adversely affected. Accordingly, the modified pattern generation method of the present invention (to be discussed below) is especially important in discrimination systems designed to accommodate bills other than U.S. currency because many non-U.S. bills lack a borderline around the printed indicia on their bills. Likewise, the modified pattern generation method of the present invention is especially important in discrimination systems designed to accommodate bills other than U.S. currency because the printed indicia of many non-U.S. bills lack sharply defined edges which in turns inhibits using the edge of the printed indicia of a bill as a trigger for the initiation of the scanning process and instead promotes reliance on using the edge of the bill itself as the trigger for the initiation of the scanning process.

The use of the optical encoder 32 for controlling the sampling process relative to the physical movement of a bill 17 across the scanheads 18a, 18b is also advantageous in that the encoder 32 can be used to provide a predetermined delay following detection of the borderline 17a prior to initiation of samples. The encoder delay can be adjusted in such a way that the bill 17 is scanned only across those segments which contain the most distinguishable printed indicia relative to the different currency denominations.

In the case of U.S. currency, for instance, it has been determined that the central, approximately two-inch (approximately 5 cm) portion of currency bills, as scanned across the central section of the narrow dimension of the bill, provides sufficient data for distinguishing among the various U.S. currency denominations. Accordingly, the optical encoder can be used to control the scanning process so that reflectance samples are taken for a set period of time and only after a certain period of time has elapsed after the borderline 17a is detected, thereby restricting the scanning to the desired central portion of the narrow dimension of the bill.

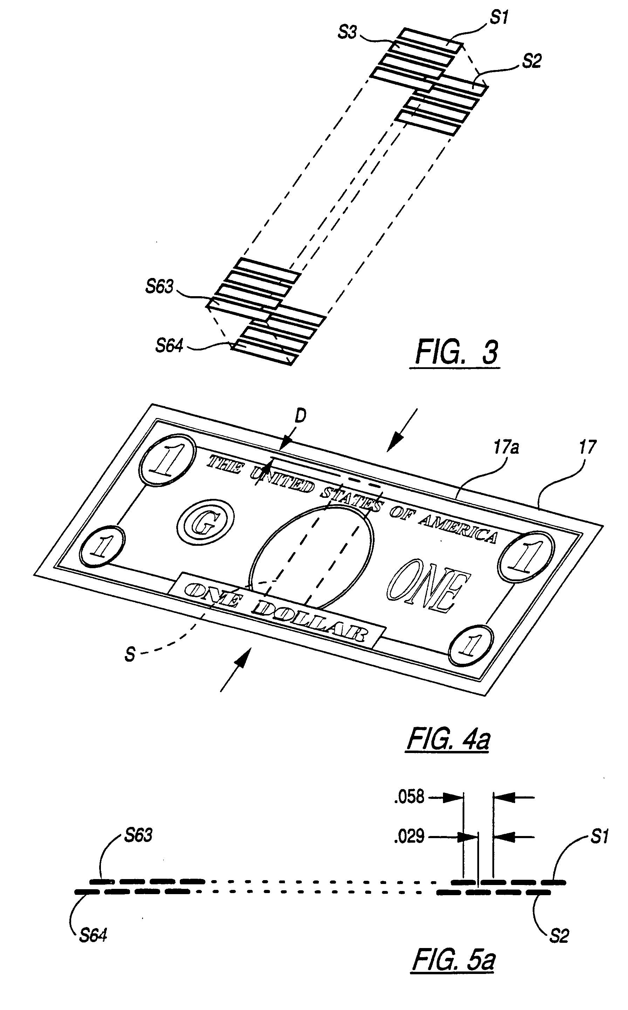

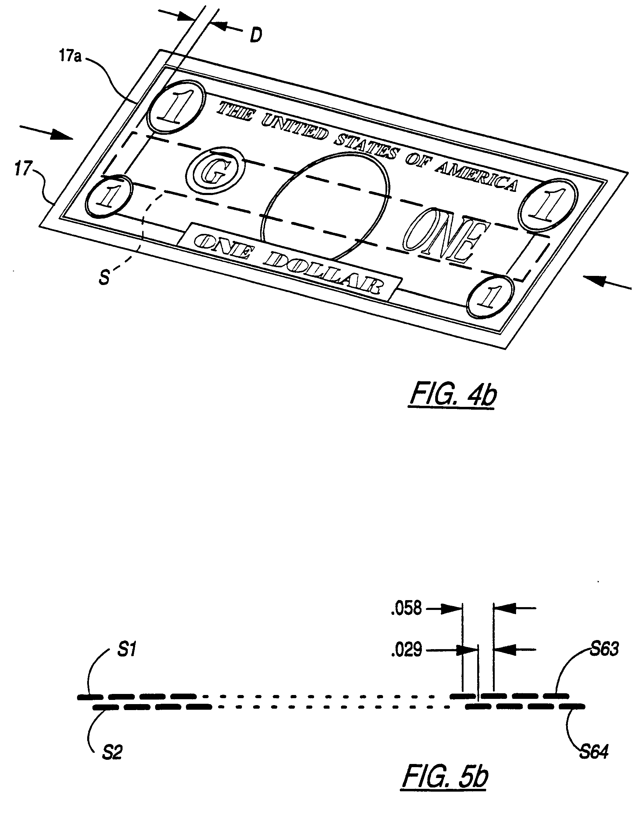

FIGs. 3-5b illustrate the scanning process in more detail. Referring to FIG. 4a, as a bill 17 is advanced in a direction parallel to the narrow edges of the bill, scanning via a slit in the scanhead 18a or 18b is effected along a segment S of the central portion of the bill 17. This segment S begins a fixed distance $D$ inboard of the borderline 17a. As the bill 17 traverses the scanhead, a strip s of the segment S is always illuminated, and the photodetector 26 produces a continuous output signal which is proportional to the intensity of the light reflected from the illuminated strip $s$ at any given instant. This output is sampled at intervals controlled by the encoder, so that the sampling intervals are precisely synchronized with the movement of the bill across the scanhead. FIG. 4b is similar to FIG. 4a but illustrating scanning along the wide dimension of the bill 17.

As illustrated in FIGs. 3, 5a, and 5b, it is preferred that the sampling intervals be selected so that the strips s that are illuminated for successive samples overlap one another. The odd-numbered and even-numbered sample strips have been separated in FIGs. 3, 5a, and 5b to more clearly illustrate this overlap. For example, the first and second strips $s1$ and $s2$ overlap each other, the second and third strips $s2$ and $s3$ overlap each other, and so on. Each adjacent pair of strips overlap each other. In the illustrative example, this is accomplished by sampling strips that are 0.050 inch (0.127 cm) wide at 0.029 inch (0.074 cm) intervals, along a segment S that is 1.83 inch (4.65 cm) long (64 samples).

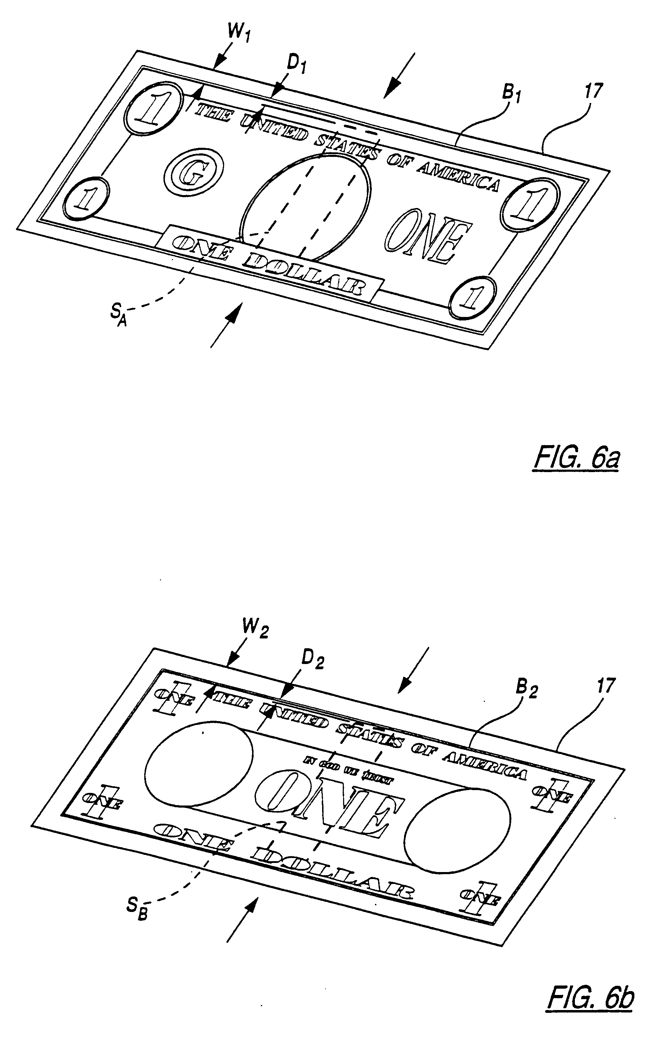

FIGs. 6a and 6b illustrate two opposing surfaces of U.S. bills. The printed pattern on the black and green surfaces of the bill are each enclosed by respective thin borderlines $B_1$ and $B_2$. As a bill is advanced in a direction parallel to the narrow edges of the bill, scanning via the wide slit of one of the scanheads is effected along a segment $S_A$ of the central portion of the black surface of the bill (FIG. 6a). As previously stated, the orientation of the bill along the transport path determines whether the upper or lower scanhead scans the black surface of the bill. This segment $S_A$ begins a fixed distance $D_1$ inboard of the borderline $B_1$, which is located a distance $W_1$ from the edge of the bill. The scanning along segment $S_A$ is as describe in connection with FIGs. 3, 4a, and 5a.

Similarly, the other of the two scanheads scans a segment $S_B$ of the central portion of the green surface of the bill (FIG. 6b). The orientation of the bill along the transport path determines whether the upper or lower scanhead scans the green surface of the bill. This segment $S_B$ begins a fixed distance $D_2$ inboard of the border line $B_2$, which is located a distance $W_2$ from the edge of the bill. For U.S. currency, the distance $W_2$ on the green surface is greater than the distance $W_1$ on the black surface. It is this feature of U.S. currency which permits one to determine the orientation of the bill relative to the upper and lower scanheads 18, thereby permitting one to select only the data samples corresponding to the green surface for correlation to the master characteristic patterns in the EPROM 34. The scanning along segment $S_B$ is as describe in connection with FIGs. 3, 4a, and 5a.

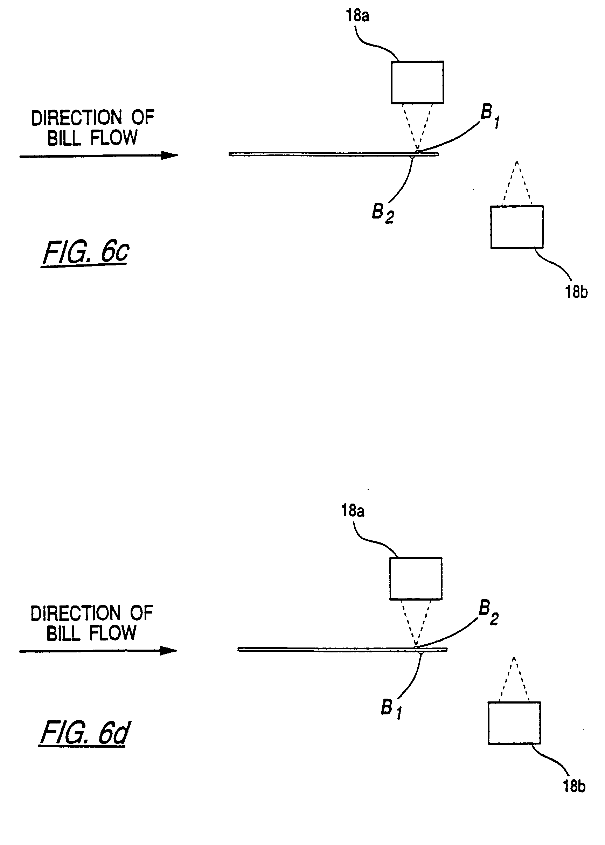

FIGs. 6c and 6d are side elevations of FIG. 2 according to a preferred embodiment of the present invention. FIG. 6c shows the first surface of a bill scanned by an upper scanhead and the second surface of the bill scanned by a lower scanhead while FIG. 6d shows the first surface of a bill scanned by a lower scanhead and the second surface of the bill scanned by an upper scanhead. FIGs. 6c and 6d illustrate the pair of optical scanheads 18a, 18b are disposed on opposite sides of the transport path to permit optical scanning of both opposing surfaces of a bill. With respect to United States currency, these opposing surfaces correspond to the black and green surfaces of a bill. One of the optical scanheads 18 (the "upper" scanhead 18a in FIGs. 6c-6d) is positioned above the transport path and illuminates a light strip upon a first surface of the bill, while the other of the optical scanheads 18 (the "lower" scanhead 18b in FIGs. 6c-6d) is positioned below the transport path and illuminates a light strip upon the second surface of the bill. The surface of the bill scanned by each scanhead 18 is determined by the orientation of the bill relative to the scanheads 18. The upper scanhead 18a is located slightly upstream relative to the lower scanhead 18b.

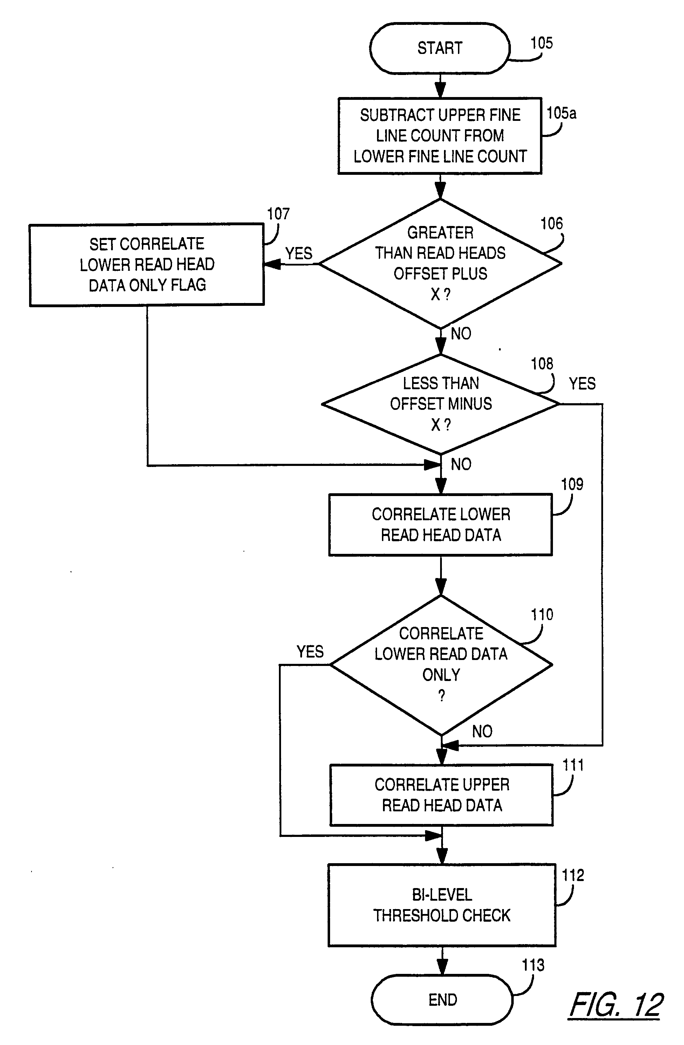

The photodetector of the upper scanhead 18a produces a first analog output corresponding to the first surface of the bill, while the photodetector of the lower scanhead 18b produces a second analog output corresponding to the second surface of the bill. The first and second analog outputs are converted into respective first and second digital outputs by means of respective analog-to-digital (ADC) convertor units 28 whose outputs are fed as digital inputs to a central processing unit (CPU) 30. As described in detail below, the CPU 30 uses the sequence of operations illustrated in FIG. 12 to determine which of the first and second digital outputs corresponds to the green surface of the bill, and then selects the "green" digital output for subsequent correlation to a series of master characteristic patterns stored in EPROM 34. As explained below, the master characteristic patterns are preferably generated by performing scans on the green surfaces, not black surfaces, of bills of different denominations. According to a preferred embodiment, the analog output corresponding to the black surface of the bill is not used for subsequent correlation.

The optical sensing and correlation technique is based upon using the above process to generate a series of stored intensity signal patterns using genuine bills for each denomination of currency that is to be detected. According to a preferred embodiment, two or four sets of master intensity signal samples are generated and stored within the system memory, preferably in the form of an EPROM 34 (see FIG. 2), for each detectable currency denomination. According to one preferred embodiment these are sets of master green-surface intensity signal samples. In the case of U.S. currency, the sets of master intensity signal samples for each bill are generated from optical scans, performed on the green surface of the bill and taken along both the "forward" and "reverse" directions relative to the pattern printed on the bill. Alternatively, the optical scanning may be performed on the black side of U.S. currency bills or on either surface of foreign bills. Additionally, the optical scanning may be performed on both sides of a bill.

In adapting this technique to U.S. currency, for example, sets of stored intensity signal samples are generated and stored for seven different denominations of U.S. currency, i.e., $1, $2, $5, $10, $20, $50 and $100. For bills which produce significant pattern changes when shifted slightly to the left or right, such as the $2, the $10 and/or the $100 bills in U.S. currency, it is preferred to store two green-side patterns for each of the "forward" and "reverse" directions, each pair of patterns for the same direction represent two scan areas that are slightly displaced from each other along the long dimension of the bill. Accordingly, a set of 16 [or 18] different green-side master characteristic patterns are stored within the EPROM for subsequent correlation purposes (four master patterns for the $10 bill [or four master patterns for the $10 bill and the $2 bill and/or the $100 bill] and two master patterns for each of the other denominations). The generation of the master patterns is discussed in more below. Once the master patterns have been stored, the pattern generated by scanning a bill under test is compared by the CPU 30 with each of the 16 [or 18] master patterns of stored intensity signal samples to generate, for each comparison, a correlation number representing the extent of correlation, i.e., similarity between corresponding ones of the plurality of data samples, for the sets of data being compared.

The CPU 30 is programmed to identify the denomination of the scanned bill as corresponding to the set of stored intensity signal samples for which the correlation number resulting from pattern comparison is found to be the highest. In order to preclude the possibility of mischaracterizing the denomination of a scanned bill, as well as to reduce the possibility of spurious notes being identified as belonging to a valid denomination, a bi-level threshold of correlation is used as the basis for making a "positive" call. If a "positive" call can not be made for a scanned bill, an error signal is generated.

Using the above sensing and correlation approach, the CPU 30 is programmed to count the number of bills belonging to a particular currency denomination as part of a given set of bills that have been scanned for a given scan batch, and to determine the aggregate total of the currency amount represented by the bills scanned during a scan batch. The CPU 30 is also linked to an output unit 36 (FIG. 2) which is adapted to provide a display of the number of bills counted, the breakdown of the bills in terms of currency denomination, and the aggregate total of the currency value represented by counted bills. The output unit 36 can also be adapted to provide a print-out of the displayed information in a desired format.

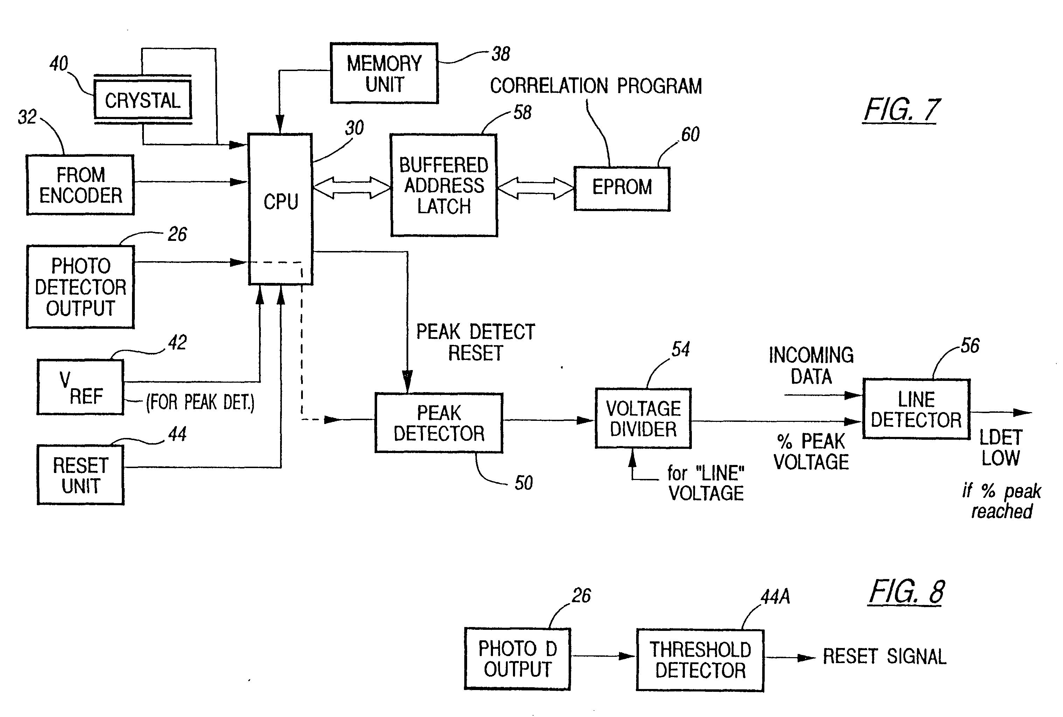

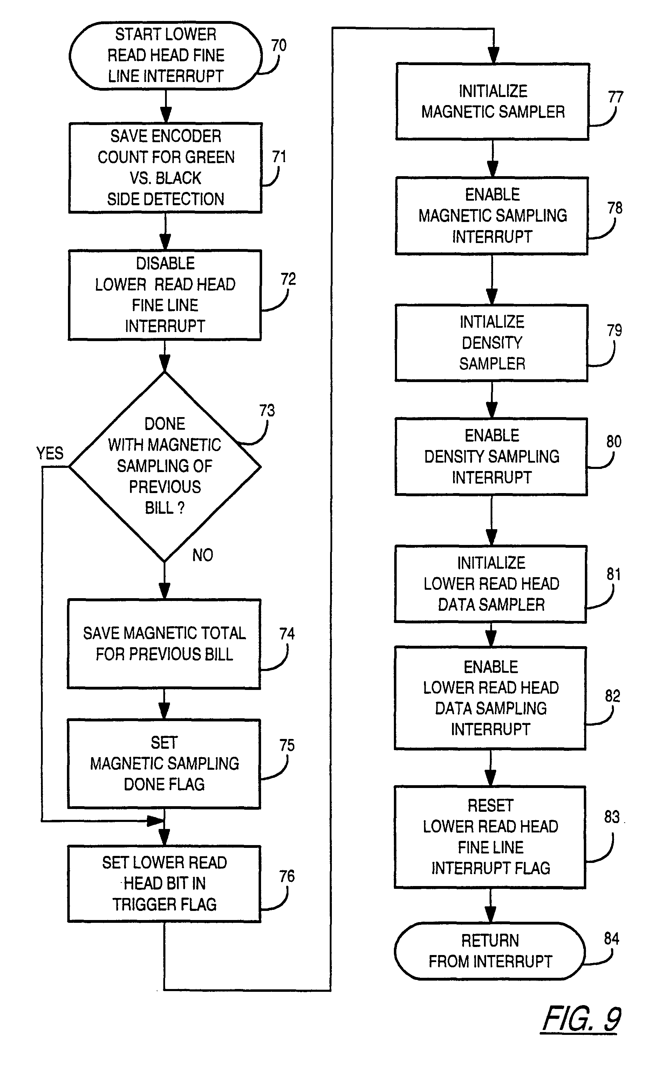

Referring now to FIGs. 7 and 8, there is shown a representation, in block diagram form, of a preferred circuit arrangement for processing and correlating reflectance data according to the system of this invention. The CPU 30 accepts and processes a variety of input signals including those from the optical encoder 32, the sensor 26 and the erasable programmable read only memory (EPROM) 60. The EPROM 60 has stored within it the correlation program on the basis of which patterns are generated and test patterns compared with stored master programs in order to identify the denomination of test currency. A crystal 40 serves as the time base for the CPU 30, which is also provided with an external reference voltage $V_{REF}$ 42 on the basis of which peak detection of sensed reflectance data is performed.

According to one embodiment, the CPU 30 also accepts a timer reset signal from a reset unit 44 which, as shown in FIG. 8, accepts the output voltage from the photodetector 26 and compares it, by means of a threshold detector 44a, relative to a pre-set voltage threshold, typically 5.0 volts, to provide a reset signal which goes "high" when a reflectance value corresponding to the presence of paper is sensed. More specifically, reflectance sampling is based on the premise that no portion of the illuminated light strip (24 in FIG. 2) is reflected to the photodetector in the absence of a bill positioned below the scanhead. Under these conditions, the output of the photodetector represents a "dark" or "zero" level reading. The photodetector output changes to a "white" reading, typically set to have a value of about 5.0 volts, when the edge of a bill first becomes positioned below the scanhead and falls under the light strip 24. When this occurs, the reset unit 44 provides a "high" signal to the CPU 30 and marks the initiation of the scanning procedure.

The machine-direction dimension, that is, the dimension parallel to the direction of bill movement, of the illuminated strip of light produced by the light sources within the scanhead is set to be relatively small for the initial stage of the scan when the thin borderline is being detected, according to a preferred embodiment. The use of the narrow slit increases the sensitivity with which the reflected light is detected and allows minute variations in the "gray" level reflected off the bill surface to be sensed. This is important in ensuring that the thin borderline of the pattern, i. e., the starting point of the printed pattern on the bill, is accurately detected. Once the borderline has been detected, subsequent reflectance sampling is performed on the basis of a relatively wider light strip in order to completely scan across the narrow dimension of the bill and obtain the desired number of samples, at a rapid rate. The use of a wider slit for the actual sampling also smooths out the output characteristics of the photodetector and realizes the relatively large magnitude of analog voltage which is essential for accurate representation and processing of the detected reflectance values.

The CPU 30 processes the output of the sensor 26 through a peak detector 50 which essentially functions to sample the sensor output voltage and hold the highest, i.e., peak, voltage value encountered after the detector has been enabled. For U.S. currency, the peak detector is also adapted to define a scaled voltage on the basis of which the printed borderline on the currency bills is detected. The output of the peak detector 50 is fed to a voltage divider 54 which lowers the peak voltage down to a scaled voltage $V_S$ representing a predefined percentage of this peak value. The voltage $V_S$ is based upon the percentage drop in output voltage of the peak detector as it reflects the transition from the "high" reflectance value resulting from the scanning of the unprinted edge portions of a currency bill to the relatively lower "gray" reflectance value resulting when the thin borderline is encountered. Preferably, the scaled voltage $V_S$ is set to be about 70 - 80 percent of the peak voltage.

The scaled voltage $V_S$ is supplied to a line detector 56 which is also provided with the incoming instantaneous output of the sensor 26. The line detector 56 compares the two voltages at its input side and generates a signal $L_{DET}$ which normally stays "low" and goes "high" when the edge of the bill is scanned. The signal $L_{DET}$ goes "low" when the incoming sensor output reaches the pre-defined percentage of the peak output up to that point, as represented by the voltage $V_S$. Thus, when the signal $L_{DET}$ goes "low", it is an indication that the borderline of the bill pattern has been detected. At this point, the CPU 30 initiates the actual reflectance sampling under control of the encoder 32 and the desired fixed number of reflectance samples are obtained as the currency bill moves across the illuminated light strip and is scanned along the central section of its narrow dimension.

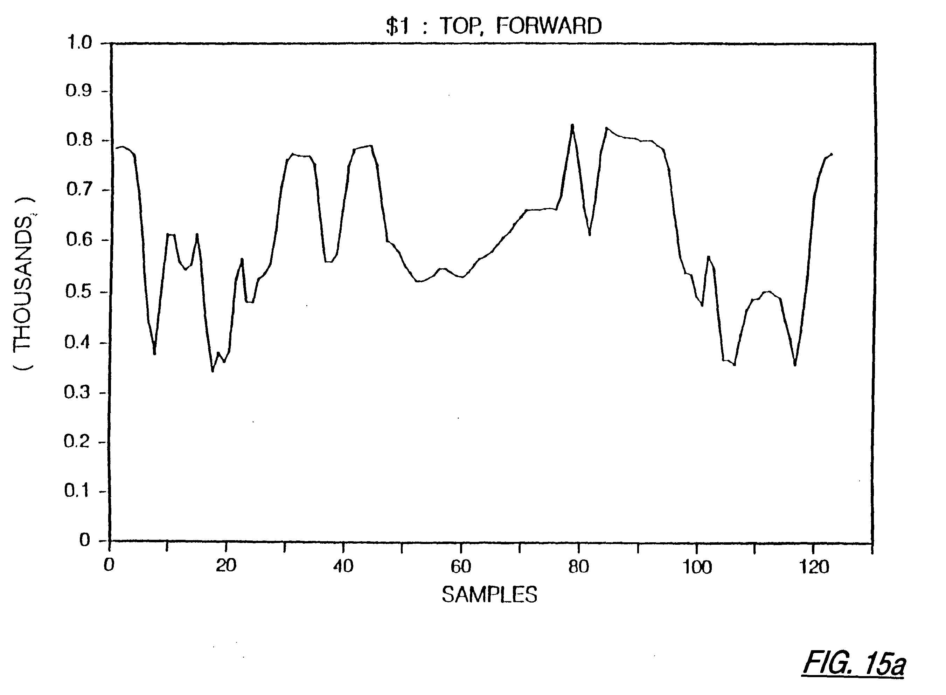

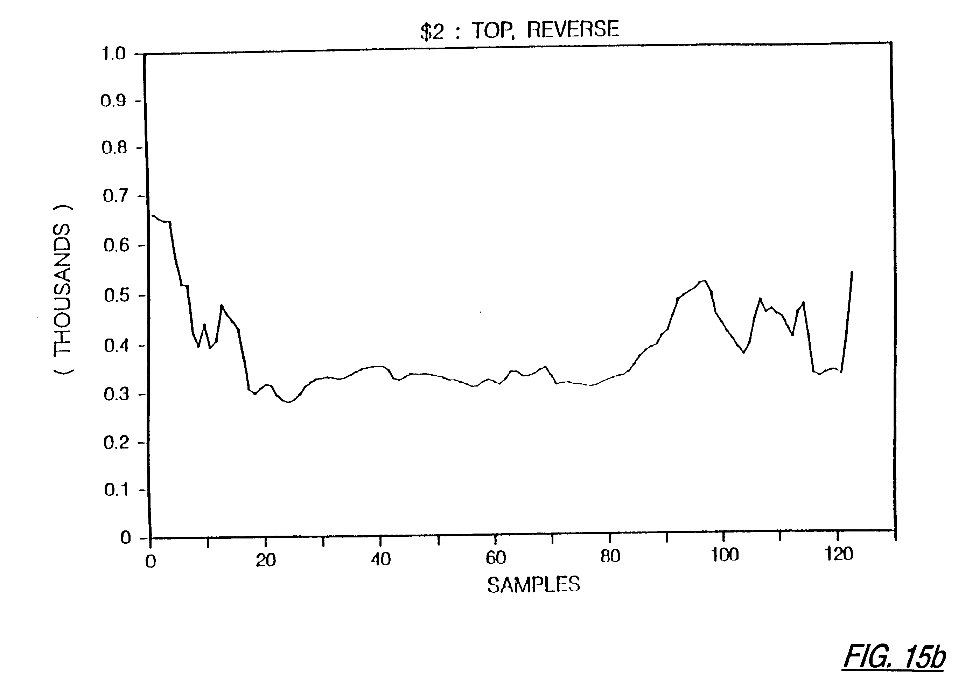

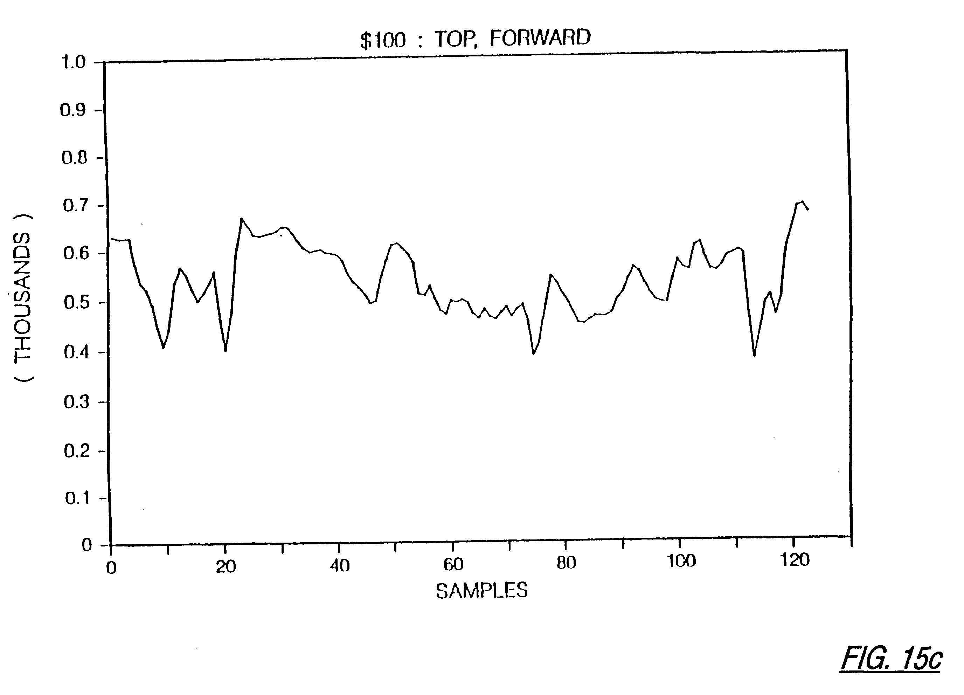

When master characteristic patterns are being generated, the reflectance samples resulting from the scanning of one or more genuine bills for each denomination are loaded into corresponding designated sections within a system memory 60, which is preferably an EPROM. During currency discrimination, the reflectance values resulting from the scanning of a test bill are sequentially compared, under control of the correlation program stored within the EPROM 60, with the corresponding master characteristic patterns stored within the EPROM 60. A pattern averaging procedure for scanning bills and generating characteristic patterns is described below in connection with FIGs. 15a-15c.

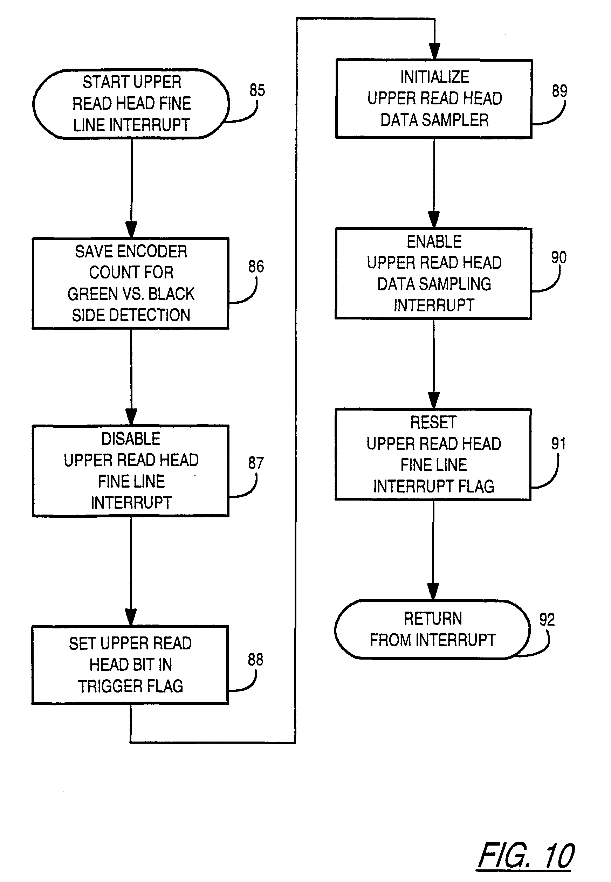

Referring now to FIGs. 9-11b, there are shown flow charts illustrating the sequence of operations involved in implementing the above-described optical sensing and correlation technique. FIGs. 9 and 10, in particular, illustrate the sequences involved in detecting the presence of a bill adjacent the scanheads and the borderlines on each side of the bill. Turning to FIG. 9, at step 70, the lower scanhead fine line interrupt is initiated upon the detection of the fine line by the lower scanhead. An encoder counter is maintained that is incremented for each encoder pulse. The encoder counter scrolls from 0 - 65,535 and then starts at 0 again. At step 71 the value of the encoder counter is stored in memory upon the detection of the fine line by the lower scanhead. At step 72 the lower scanhead fine line interrupt is disabled so that it will not be triggered again during the interrupt period. At step 73, it is determined whether the magnetic sampling has been completed for the previous bill. If it has not, the magnetic total for the previous bill is stored in memory at step 74 and the magnetic sampling done flag is set at step 75 so that magnetic sampling of the present bill may thereafter be performed. Steps 74 and 75 are skipped if it is determined at step 73 that the magnetic sampling has been completed for the previous bill. At step 76, a lower scanhead bit in the trigger flag is set. This bit is used to indicate that the lower scanhead has detected the fine line. The magnetic sampler is initialized at step 77 and the magnetic sampling interrupt is enabled at step 78. A density sampler is initialized at step 79 and a density sampling interrupt is enabled at step 80. The lower read data sampler is initialized at step 81 and a lower scanhead data sampling interrupt is enabled at step 82. At step 83, the lower scanhead fine line interrupt flag is reset and at step 84 the program returns from the interrupt.

Turning to FIG. 10, at step 85, the upper scanhead fine line interrupt is initiated upon the detection of the fine line by the upper scanhead. At step 86 the value of the encoder counter is stored in memory upon the detection of the fine line by the upper scanhead. This information in connection with the encoder counter value associated with the detection of the fine line by the lower scanhead may then be used to determine the face orientation of a bill, that is whether a bill is fed green side up or green side down in the case of U.S. bills as is described in more detail below in connection with FIG. 12. At step 87 the upper scanhead fine line interrupt is disabled so that it will not be triggered again during the interrupt period. At step 88, the upper scanhead bit in the trigger flag is set. This bit is used to indicate that the upper scanhead has detected the fine line. By checking the lower and upper scanhead bits in the trigger flag it can be determined whether each side has detected a respective fine line. Next, the upper scanhead data sampler is initialized at step 89 and the upper scanhead data sampling interrupt is enabled at step 90. At step 91, the upper scanhead fine line interrupt flag is reset and at step 92 the program returns from the interrupt.

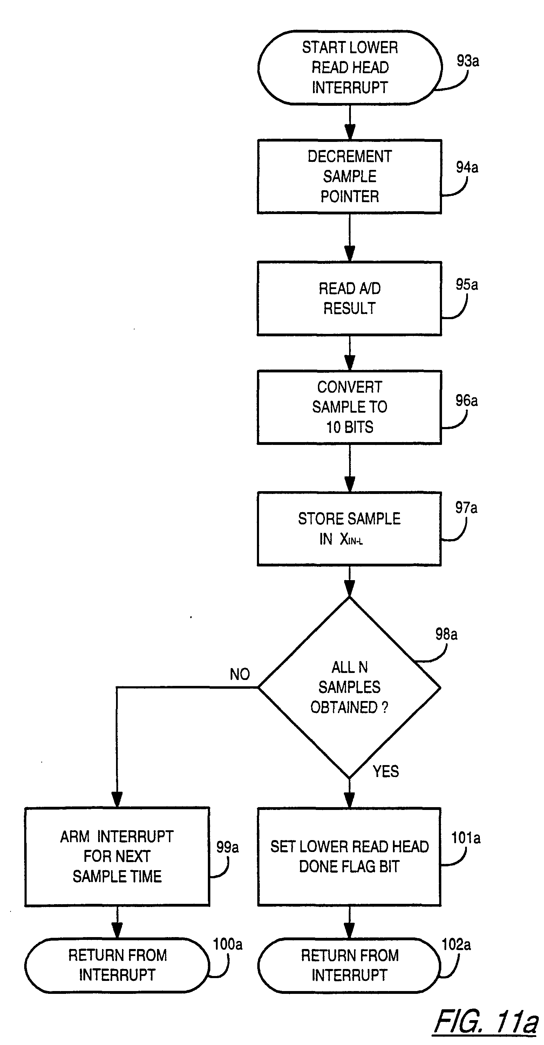

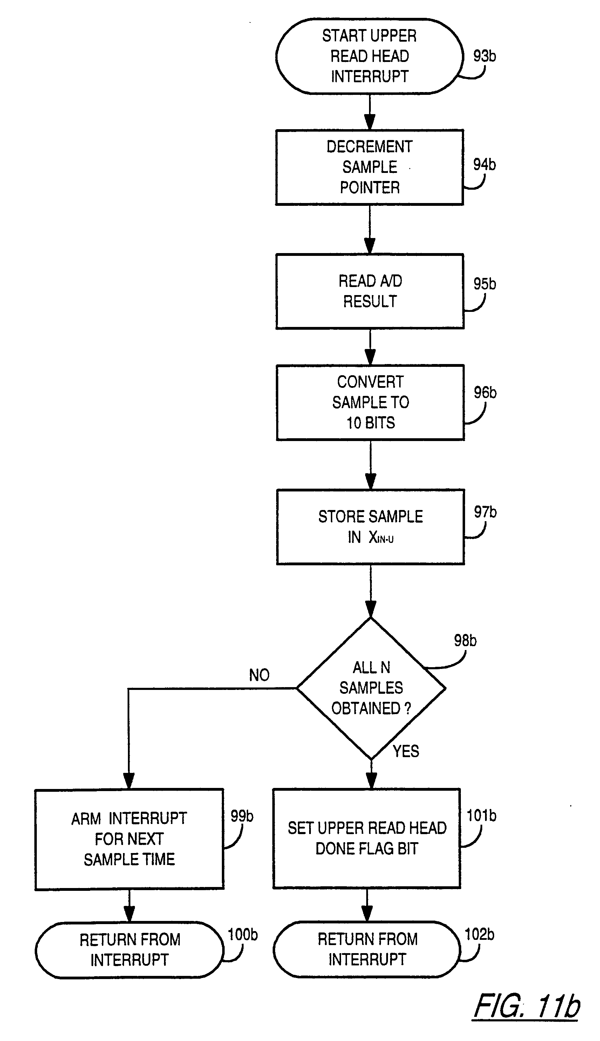

Referring now to FIGs. 11a and 11b there are shown, respectively, the digitizing routines associated with the lower and upper scanheads. FIG. 11a is a flow chart illustrating the sequential procedure involved in the analog-to-digital conversion routine associated with the lower scanhead. The routine is started at step 93a. Next, the sample pointer is decremented at step 94a so as to maintain an indication of the number of samples remaining to be obtained. The sample pointer provides an indication of the sample being obtained and digitized at a given time. At step 95a, the digital data corresponding to the output of the photodetector associated with the lower scanhead for the current sample is read. The data is converted to its final form at step 96a and stored within a pre-defined memory segment as $X_{IN-L}$ at step 97a.

Next, at step 98a, a check is made to see if the desired fixed number of samples "N" has been taken. If the answer is found to be negative, step 99a is accessed where the interrupt authorizing the digitization of the succeeding sample is enabled and the program returns from interrupt at step 100a for completing the rest of the digitizing process. However, if the answer at step 98a is found to be positive, i.e., the desired number of samples have already been obtained, a flag, namely the lower scanhead done flag bit, indicating the same is set at step 101a and the program returns from interrupt at step 102a.

FIG. 11b is a flow chart illustrating the sequential procedure involved in the analog-to-digital conversion routine associated with the upper scanhead. The routine is started at step 93b. Next, the sample pointer is decremented at step 94b so as to maintain an indication of the number of samples remaining to be obtained. The sample pointer provides an indication of the sample being obtained and digitized at a given time. At step 95b, the digital data corresponding to the output of the photodetector associated with the upper scanhead for the current sample is read. The data is converted to its final form at step 96b and stored within a pre-defined memory segment as $X_{IN-U}$ at step 97b.

Next, at step 98b, a check is made to see if the desired fixed number of samples "N" has been taken. If the answer is found to be negative, step 99b is accessed where the interrupt authorizing the digitization of the succeeding sample is enabled and the program returns from interrupt at step 100b for completing the rest of the digitizing process. However, if the answer at step 98b is found to be positive, i.e., the desired number of samples have already been obtained, a flag, namely the upper scanhead done flag bit, indicating the same is set at step 101b and the program returns from interrupt at step 102b.

The CPU 30 is programmed with the sequence of operations in FIG. 12 to correlate at least initially only the test pattern corresponding to the green surface of a scanned bill. As shown in FIGs. 6c-6d, the upper scanhead 18a is located slightly upstream adjacent the bill transport path relative to the lower scanhead 18b. The distance between the scanheads 18a, 18b in a direction parallel to the transport path corresponds to a predetermined number of encoder counts. It should be understood that the encoder 32 produces a repetitive tracking signal synchronized with incremental movements of the bill transport mechanism, and this repetitive tracking signal has a repetitive sequence of counts (e. g., 65,535 counts) associated therewith. As a bill is scanned by the upper and lower scanheads 18a, 18b, the CPU 30 monitors the output of the upper scanhead 18a to detect the borderline of a first bill surface facing the upper scanhead 18a. Once this borderline of the first surface is detected, the CPU 30 retrieves and stores a first encoder count in memory. Similarly, the CPU 30 monitors the output of the lower scanhead 18b to detect the borderline of a second bill surface facing the lower scanhead 18b. Once the borderline of the second surface is detected, the CPU 30 retrieves and stores a second encoder count in memory.

Referring to FIG. 12, the CPU 30 is programmed to calculate the difference between the first and second encoder counts (step 105a). If this difference is greater than the predetermined number of encoder counts corresponding to the distance between the scanheads 18a, 18b plus some safety factor number "X", e.g., 20 (step 106), the bill is oriented with its black surface facing the upper scanhead 18a and its green surface facing the lower scanhead 18b. This can best be understood by reference to FIG. 6c which shows a bill with the foregoing orientation. In this situation, once the borderline $B_1$ of the black surface passes beneath the upper scanhead 18a and the first encoder count is stored, the borderline $B_2$ still must travel for a distance greater than the distance between the upper and lower scanheads 18a, 18b in order to pass over the lower scanhead 18b. As a result, the difference between the second encoder count associated with the borderline $B_2$ and the first encoder count associated with the borderline $B_1$ will be greater than the predetermined number of encoder counts corresponding to the distance between the scanheads 18a, 18b. With the bill oriented with its green surface facing the lower scanhead, the CPU 30 sets a flag to indicate that the test pattern produced by the lower scanhead 18b should be correlated (step 107). Next, this test pattern is correlated with the green-side master characteristic patterns stored in memory (step 109).

If at step 106 the difference between the first and second encoder counts is less than the predetermined number of encoder counts corresponding to the distance between the scanheads 18a, 18b, the CPU 30 is programmed to determine whether the difference between the first and second encoder counts is less than the predetermined number minus some safety number "X", e.g., 20 (step 108). If the answer is negative, the orientation of the bill relative to the scanheads 18a, 18b is uncertain so the CPU 30 is programmed to correlate the test patterns produced by both the upper and lower scanheads 18a, 18b with the green-side master characteristic patterns stored in memory (steps 109, 110, and 111).

If the answer is affirmative, the bill is oriented with its green surface facing the upper scanhead 18a and its black surface facing the lower scanhead 18b. This can best be understood by reference to FIG. 6d, which shows a bill with the foregoing orientation. In this situation, once the borderline $B_2$ of the green surface passes beneath the upper scanhead 18a and the first encoder count is stored, the borderline $B_1$ must travel for a distance less than the distance between the upper and lower scanheads 18a, 18b in order to pass over the lower scanhead 18b. As a result, the difference between the second encoder count associated with the borderline $B_1$ and the first encoder count associated with the borderline $B_2$ should be less than the predetermined number of encoder counts corresponding to the distance between the scanheads 18a, 18b. To be on the safe side, it is required that the difference between first and second encoder counts be less than the predetermined number minus the safety number "X". Therefore, the CPU 30 is programmed to correlate the test pattern produced by the upper scanhead 18a with the green-side master characteristic patterns stored in memory (step 111).

After correlating the test pattern associated with either the upper scanhead 18a, the lower scanhead 18b, or both scanheads 18a, 18b, the CPU 30 is programmed to perform the bi-level threshold check (step 112).

A simple correlation procedure is utilized for processing digitized reflectance values into a form which is conveniently and accurately compared to corresponding values pre-stored in an identical format. More specifically, as a first step, the mean value $\bar{X}$ for the set of digitized reflectance samples (comparing "n" samples) obtained for a bill scan run is first obtained as below:

$$\bar{X} = \sum_{i=0}^{n} \frac{X_i}{n} \qquad (1)$$

Subsequently, a normalizing factor Sigma ("σ") is determined as being equivalent to the sum of the square of the difference between each sample and the mean, as normalized by the total number $n$ of samples. More specifically, the normalizing factor is calculated as below:

$$\sigma = \sum_{i=0}^{n} \frac{|X_i - \bar{X}|^2}{n} \qquad (2)$$

In the final step, each reflectance sample is normalized by obtaining the difference between the sample and the above-calculated mean value and dividing it by the square root of the normalizing factor σ as defined by the following equation:

$$X_n = \frac{X_i - \bar{X}}{(\sigma)^{1/2}} \tag{3}$$

The result of using the above correlation equations is that, subsequent to the normalizing process, a relationship of correlation exists between a test pattern and a master pattern such that the aggregate sum of the products of corresponding samples in a test pattern and any master pattern, when divided by the total number of samples, equals unity if the patterns are identical. Otherwise, a value less than unity is obtained. Accordingly, the correlation number or factor resulting from the comparison of normalized samples within a test pattern to those of a stored master pattern provides a clear indication of the degree of similarity or correlation between the two patterns.

According to a preferred embodiment of this invention, the fixed number of reflectance samples which are digitized and normalized for a bill scan is selected to be 64. It has experimentally been found that the use of higher binary orders of samples (such as 128, 256, etc.) does not provide a correspondingly increased discrimination efficiency relative to the increased processing time involved in implementing the above-described correlation procedure. It has also been found that the use of a binary order of samples lower than 64, such as 32, produces a substantial drop in discrimination efficiency.

The correlation factor can be represented conveniently in binary terms for ease of correlation. In a preferred embodiment, for instance, the factor of unity which results when a hundred percent correlation exists is represented in terms of the binary number $2^{10}$, which is equal to a decimal value of 1024. Using the above procedure, the normalized samples within a test pattern are compared to the master characteristic patterns stored within the system memory in order to determine the particular stored pattern to which the test pattern corresponds most closely by identifying the comparison which yields a correlation number closest to 1024.

A bi-level threshold of correlation is required to be satisfied before a particular call is made, for at least certain denominations of bills. More specifically, the correlation procedure is adapted to identify the two highest correlation numbers resulting from the comparison of the test pattern to one of the stored patterns. At that point, a minimum threshold of correlation is required to be satisfied by these two correlation numbers. It has experimentally been found that a correlation number of about 850 serves as a good cut-off threshold above which positive calls may be made with a high degree of confidence and below which the designation of a test pattern as corresponding to any of the stored patterns is uncertain. As a second threshold level, a minimum separation is prescribed between the two highest correlation numbers before making a call. This ensures that a positive call is made only when a test pattern does not correspond, within a given range of correlation, to more than one stored master pattern. Preferably, the minimum separation between correlation numbers is set to be 150 when the highest correlation number is between 800 and 850. When the highest correlation number is below 800, no call is made.

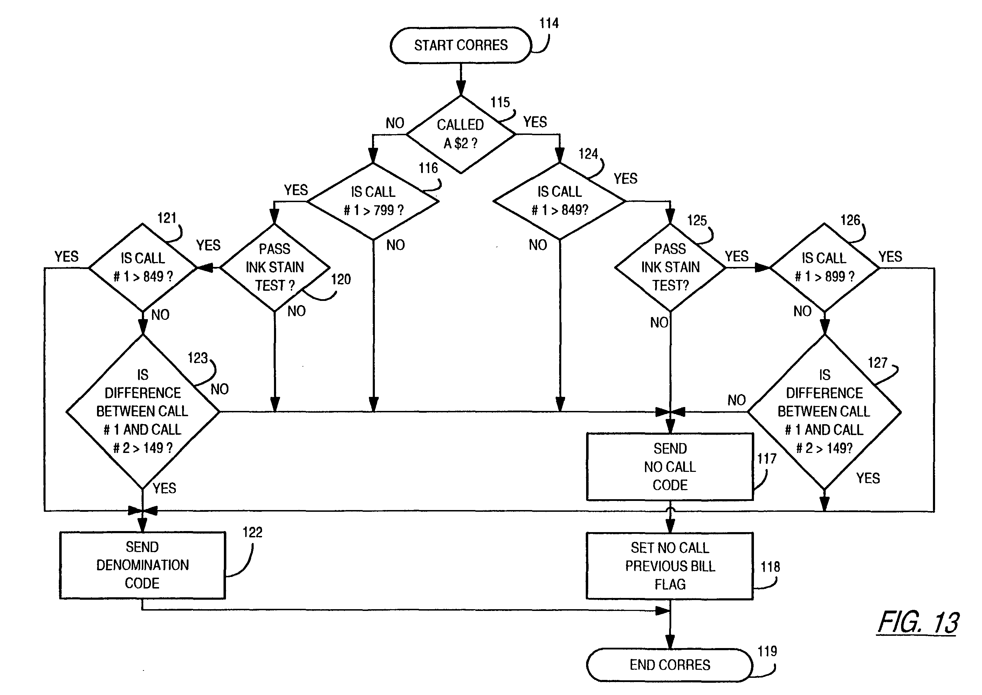

Next a routine designated as "CORRES" is initiated. The procedure involved in executing the routine CORRES is illustrated at FIG. 13 which shows the routine as starting at step 114. Step 115 determines whether the bill has been identified as a $2 bill, and, if the answer is negative, step 116 determines whether the best correlation number ("call #1") is greater than 799. If the answer is negative, the correlation number is too low to identify the denomination of the bill with certainty, and thus step 117 generates a "no call" code. A "no call previous bill" flag is then set at step 118, and the routine returns to the main program at step 119.

An affirmative answer at step 116 advances the system to step 120, which determines whether the sample data passes an ink stain test (described below). If the answer is negative, a "no call" code is generated at step 117. If the answer is affirmative, the system advances to step 121 which determines whether the best correlation number is greater than 849. An affirmative answer at step 121 indicates that the correlation number is sufficiently high that the denomination of the scanned bill can be identified with certainty without any further checking. Consequently, a "denomination" code identifying the denomination represented by the stored pattern resulting in the highest correlation number is generated at step 122, and the system returns to the main program at step 119.

A negative answer at step 121 indicates that the correlation number is between 800 and 850. It has been found that correlation numbers within this range are sufficient to identify all bills except the $2 bill. Accordingly, a negative response at step 121 advances the system to step 123 which determines whether the difference between the two highest correlation numbers ("call #1" and "call #2") is greater than 149. If the answer is affirmative, the denomination identified by the highest correlation number is acceptable, and thus the "denomination" code is generated at step 122. If the difference between the two highest correlation numbers is less than 150, step 123 produces a negative response which advances the system to step 117 to generate a "no call" code.

Returning to step 115, an affirmative response at this step indicates that the initial call is a $2 bill. This affirmative response initiates a series of steps 124-127 which are identical to steps 116, 120, 121 and 123 described above, except that the numbers 799 and 849 used in steps 116 and 121 are changed to 849 and 899, respectively, in steps 124 and 126. The result is either the generation of a "no call" code at step 117 or the generation of a $2 "denomination" code at step 122.

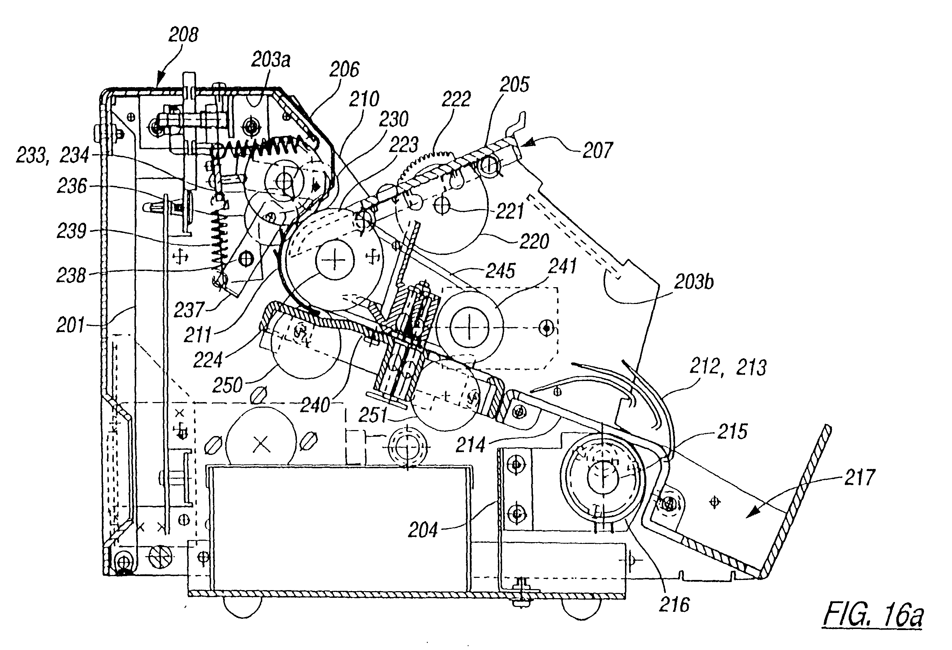

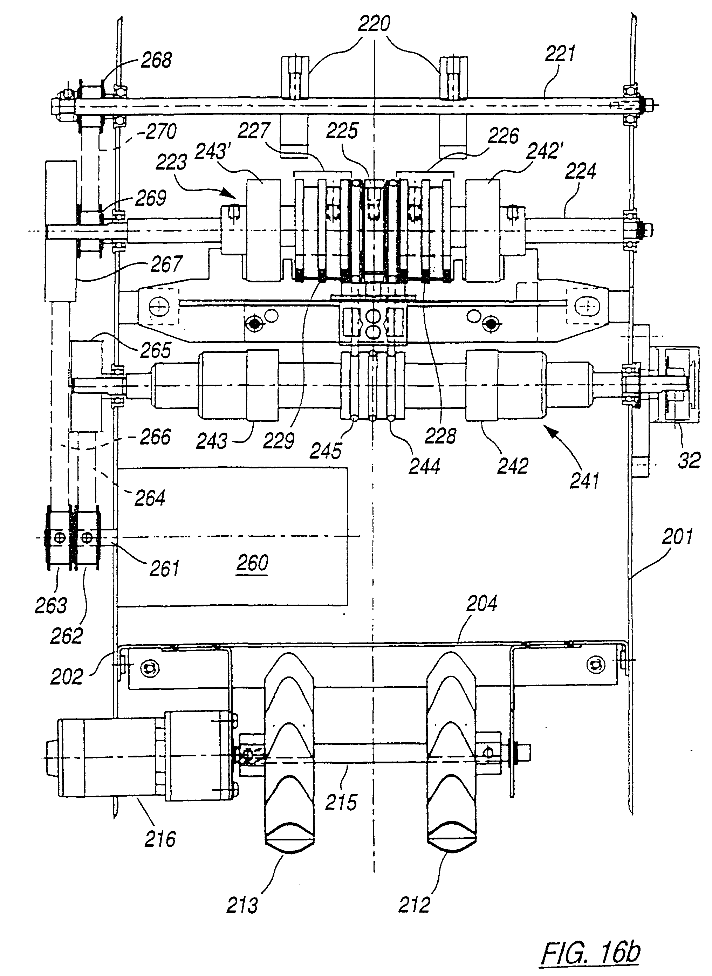

Referring now to FIGs. 16a-18, the mechanical portions of the preferred currency discrimination and counting machine include a rigid frame formed by a pair of side plates 201 and 202, a pair of top plates 203a and 203b, and a lower front plate 204. The input receptacle for receiving a stack of bills to be processed is formed by downwardly sloping and converging walls 205 and 206 formed by a pair of removable covers 207 and 208 which snap onto the frame. The rear wall 206 supports a removable hopper 209 which includes a pair of vertically disposed side walls 210a and 210b which complete the receptacle for the stack of currency bills to be processed.

From the input receptacle, the currency bills are moved in seriatim from the bottom of the stack along a curved guideway 211 which receives bills moving downwardly and rearwardly and changes the direction of travel to a forward direction. The curvature of the guideway 211 corresponds substantially to the curved periphery of the drive roll 223 so as to form a narrow passageway for the bills along the rear side of the drive roll. The exit end of the guideway 211 directs the bills onto a linear path where the bills are scanned and stacked. The bills are transported and stacked with the narrow dimension of the bills maintained parallel to the transport path and the direction of movement at all times.

Stacking of the bills is effected at the forward end of the linear path, where the bills are fed into a pair of driven stacking wheels 212 and 213. These wheels project upwardly through a pair of openings in a stacker plate 214 to receive the bills as they are advanced across the downwardly sloping upper surface of the plate. The stacker wheels 212 and 213 are supported for rotational movement about a shaft 215 journalled on the rigid frame and driven by a motor 216. The flexible blades of the stacker wheels deliver the bills into an output receptacle 217 at the forward end of the stacker plate 214. During operation, a currency bill which is delivered to the stacker plate 214 is picked up by the flexible blades and becomes lodged between a pair of adjacent blades which, in combination, define a curved enclosure which decelerates a bill entering therein and serves as a means for supporting and transferring the bill into the output receptacle 217 as the stacker wheels 212, 213 rotate. The mechanical configuration of the stacker wheels, as well as the manner in which they cooperate with the stacker plate, is conventional and, accordingly, is not described in detail herein.

Returning now to the input region of the machine as shown in FIGs. 16a-18, bills that are stacked on the bottom wall 205 of the input receptacle are stripped, one at a time, from the bottom of the stack. The bills are stripped by a pair of stripping wheels 220 mounted on a drive shaft 221 which, in turn, is supported across the side walls 201, 202. The stripping wheels 220 project through a pair of slots formed in the cover 207. Part of the periphery of each wheel 220 is provided with a raised high-friction, serrated surface 222 which engages the bottom bill of the input stack as the wheels 220 rotate, to initiate feeding movement of the bottom bill from the stack. The serrated surfaces 222 project radially beyond the rest of the wheel peripheries so that the wheels "jog" the bill stack during each revolution so as to agitate and loosen the bottom currency bill within the stack, thereby facilitating the stripping of the bottom bill from the stack.

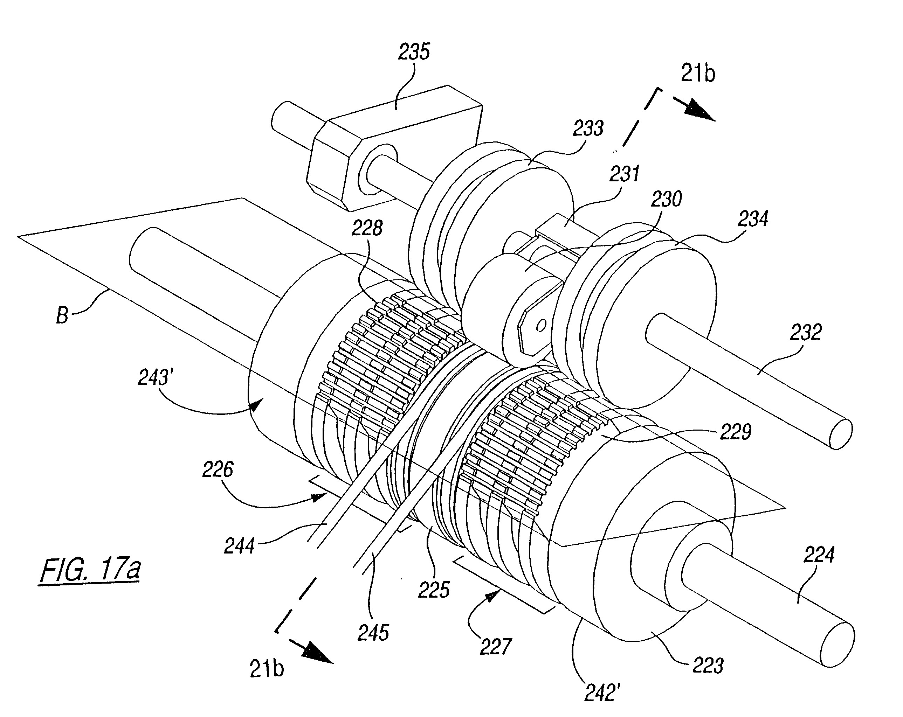

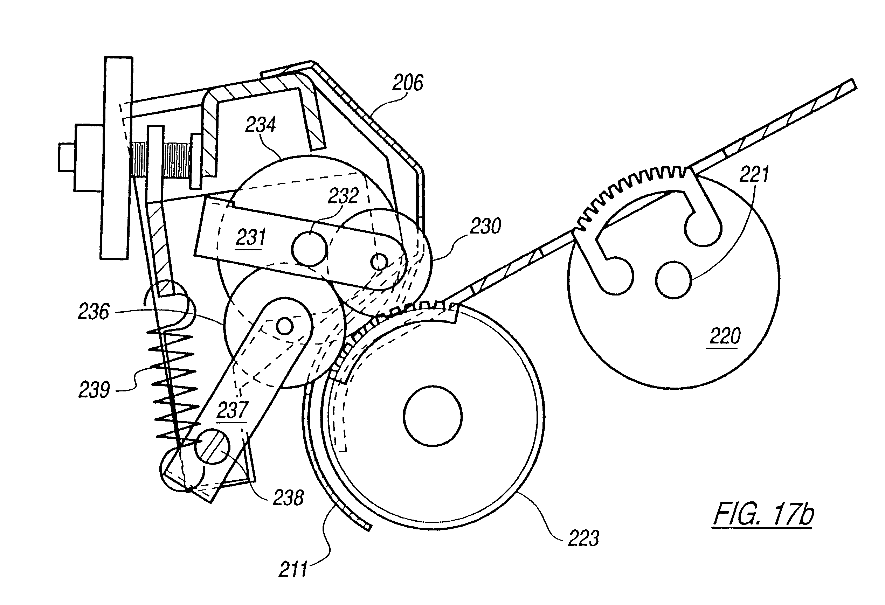

The stripping wheels 220 feed each stripped bill B (FIG. 17a) onto a drive roll 223 mounted on a driven shaft 224 supported across the side walls 201 and 202. As can be seen most clearly in FIGs. 17a and 17b, the drive roll 223 includes a central smooth friction surface 225 formed of a material such as rubber or hard plastic. This smooth friction surface 225 is sandwiched between a pair of grooved surfaces 226 and 227 having serrated portions 228 and 229 formed from a high-friction material.

The serrated surfaces 228, 229 engage each bill after it is fed onto the drive roll 223 by the stripping wheels 220, to frictionally advance the bill into the narrow arcuate passageway formed by the curved guideway 211 adjacent the rear side of the drive roll 223. The rotational movement of the drive roll 223 and the stripping wheels 220 is synchronized so that the serrated surfaces on the drive roll and the stripping wheels maintain a constant relationship to each other. Moreover, the drive roll 223 is dimensioned so that the circumference of the outermost portions of the grooved surfaces is greater than the width W of a bill, so that the bills advanced by the drive roll 223 are spaced apart from each other, for the reasons discussed above. That is, each bill fed to the drive roll 223 is advanced by that roll only when the serrated surfaces 228, 229 come into engagement with the bill, so that the circumference of the drive roll 223 determines the spacing between the leading edges of successive bills.

To avoid the simultaneous removal of multiple bills from the stack in the input receptacle, particularly when small stacks of bills are loaded into the machine, the stripping wheels 220 are always stopped with the raised, serrated portions 222 positioned below the bottom wall 205 of the input receptacle. This is accomplished by continuously monitoring the angular position of the serrated portions of the stripping wheels 220 via the encoder 32, and then controlling the stopping time of the drive motor so that the motor always stops the stripping wheels in a position where the serrated portions 222 are located beneath the bottom wall 205 of the input receptacle. Thus, each time a new stack of bills is loaded into the machine, those bills will rest on the smooth portions of the stripping wheels. This has been found to significantly reduce the simultaneous feeding of double or triple bills, particularly when small stacks of bills are involved.

In order to ensure firm engagement between the drive roll 223 and the currency bill being fed, an idler roll 230 urges each incoming bill against the smooth central surface 225 of the drive roll 223. The idler roll 230 is journalled on a pair of arms 231 which are pivotally mounted on a support shaft 232. Also mounted on the shaft 232, on opposite sides of the idler roll 230, are a pair of grooved guide wheels 233 and 234. The grooves in these two wheels 233, 234 are registered with the central ribs in the two grooved surfaces 226, 227 of the drive roll 223. The wheels 233, 234 are locked to the shaft 232, which in turn is locked against movement in the direction of the bill movement (clockwise as view in FIG. 16a) by a one-way spring clutch 235. Each time a bill is fed into the nip between the guide wheels 233, 234 and the drive roll 223, the clutch 235 is energized to turn the shaft 232 just a few degrees in a direction opposite the direction of bill movement. These repeated incremental movements distribute the wear uniformly around the circumferences of the guide wheels 233, 234. Although the idler roll 230 and the guide wheels 233, 234 are mounted behind the guideway 211, the guideway is apertured to allow the roll 230 and the wheels 233, 234 to engage the bills on the front side of the guideway.

Beneath the idler roll 230, a spring-loaded pressure roll 236 (FIGs. 16a and 16b) presses the bills into firm engagement with the smooth friction surface 225 of the drive roll as the bills curve downwardly along the guideway 211. This pressure roll 236 is journalled on a pair of arms 237 pivoted on a stationary shaft 238. A spring 239 attached to the lower ends of the arms 237 urges the roll 236 against the drive roll 233, through an aperture in the curved guideway 211.

At the lower end of the curved guideway 211, the bill being transported by the drive roll 223 engages a flat guide plate 240 which carries a lower scan head 18. Currency bills are positively driven along the flat plate 240 by means of a transport roll arrangement which includes the drive roll 223 at one end of the plate and a smaller driven roll 241 at the other end of the plate. Both the driver roll 223 and the smaller roll 241 include pairs of smooth raised cylindrical surfaces 242 and 243 which hold the bill flat against the plate 240. A pair of O rings 244 and 245 fit into grooves formed in both the roll 241 and the roll 223 to engage the bill continuously between the two rolls 223 and 241 to transport the bill while helping to hold the bill flat against the guide plate 240.

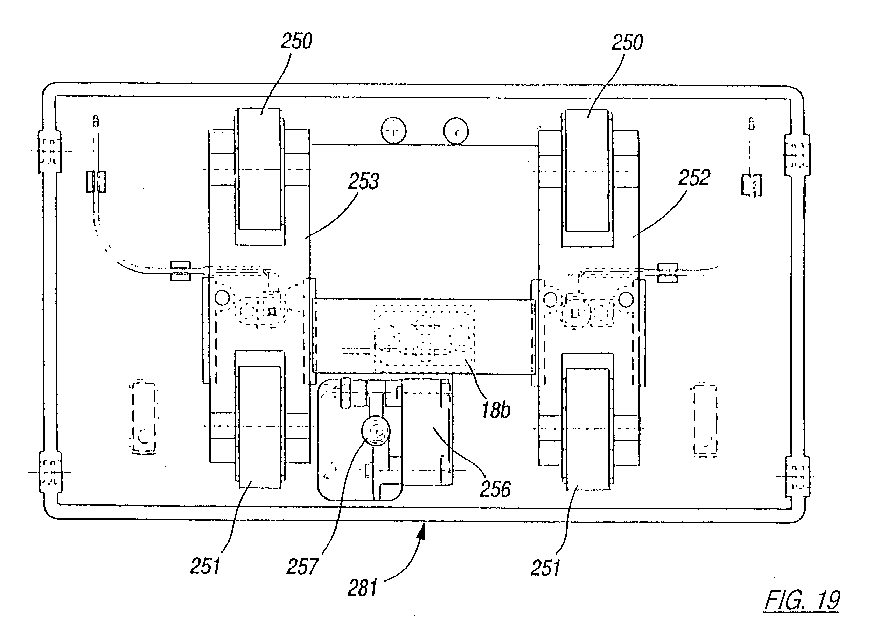

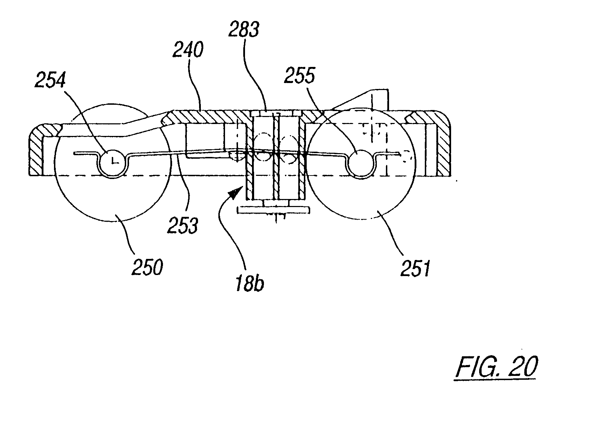

The flat guide plate 240 is provided with openings through which the raised surfaces 242 and 243 of both the drive roll 223 and the smaller driven roll 241 are subjected to counter-rotating contact with corresponding pairs of passive transport rolls 250 and 251 having high-friction rubber surfaces. The passive rolls 250, 251 are mounted on the underside of the flat plate 240 in such a manner as to be freewheeling about their axes 254 and 255 and biased into counter-rotating contact with the corresponding upper rolls 223 and 241. The passive rolls 250 and 251 are biased into contact with the driven rolls 223 and 241 by means of a pair of H-shaped leaf springs 252 and 253 (see FIGs. 19 and 20). Each of the four rolls 250, 251 is cradled between a pair of parallel arms of one of the H-shaped leaf springs 252 and 253. The central portion of each leaf spring is fastened to the plate 240, which is fastened rigidly to the machine frame, so that the relatively stiff arms of the H-shaped springs exert a constant biasing pressure against the rolls and push them against the upper rolls 223 and 241.

The points of contact between the driven and passive transport rolls are preferably coplanar with the flat upper surface of the plate 240 so that currency bills can be positively driven along the top surface of the plate in a flat manner. The distance between the axes of the two driven transport rolls, and the corresponding counter-rotating passive rolls, is selected to be just short of the length of the narrow dimension of the currency bills. Accordingly, the bills are firmly gripped under uniform pressure between the upper and lower transport rolls within the scanhead area, thereby minimizing the possibility of bill skew and enhancing the reliability of the overall scanning and recognition process.

The positive guiding arrangement described above is advantageous in that uniform guiding pressure is maintained on the bills as they are transported through the optical scanhead area, and twisting or skewing of the bills is substantially reduced. This positive action is supplemented by the use of the H-springs 252, 253 for uniformly biasing the passive rollers into contact with the active rollers so that bill twisting or skew resulting from differential pressure applied to the bills along the transport path is avoided. The O-rings 244, 245 function as simple, yet extremely effective means for ensuring that the central portions of the bills are held flat.

The location of a magnetic head 256 and a magnetic head adjustment screw 257 are illustrated in FIG. 19. The adjustment screw 257 adjusts the proximity of the magnetic head 256 relative to a passing bill and thereby adjusts the strength of the magnetic field in the vicinity of the bill.

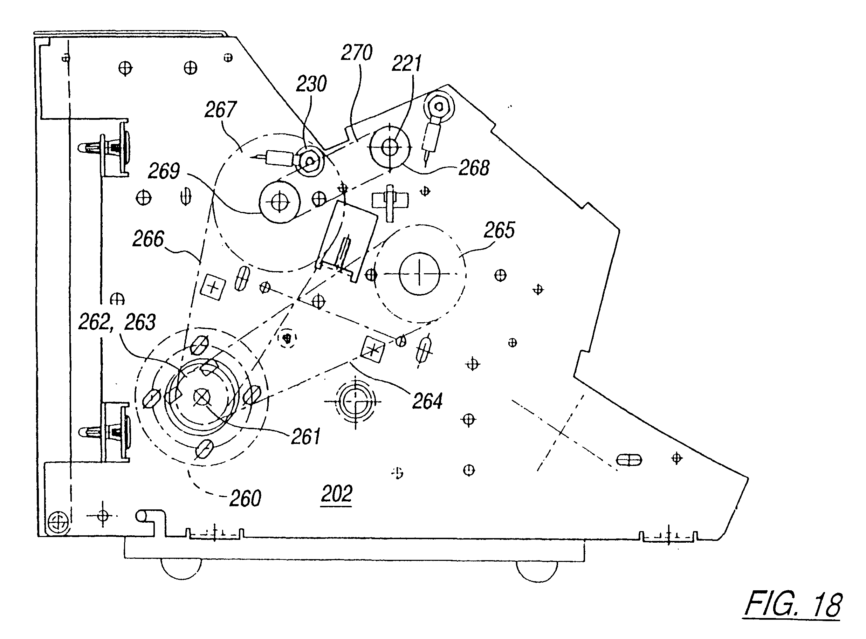

FIG. 18 shows the mechanical arrangement for driving the various means for transporting currency bills through the machine. A motor 260 drives a shaft 261 carrying a pair of pulleys 262 and 263. The pulley 262 drives the roll 241 through a belt 264 and pulley 265, and the pulley 263 drives the roll 223 through a belt 266 and pulley 267. Both pulleys 265 and 267 are larger than pulleys 262 and 263 in order to achieve the desired speed reduction from the typically high speed at which the motor 260 operates.

The shaft 221 of the stripping wheels 220 is driven by means of a pulley 268 provided thereon and linked to a corresponding pulley 269 on the shaft 224 through a belt 270. The pulleys 268 and 269 are of the same diameter so that the shafts 221 and 224 rotate in unison.

As shown in FIG. 16b, the optical encoder 32 is mounted on the shaft of the roller 241 for precisely tracking the position of each bill as it is transported through the machine, as discussed in detail above in connection with the optical sensing and correlation technique.

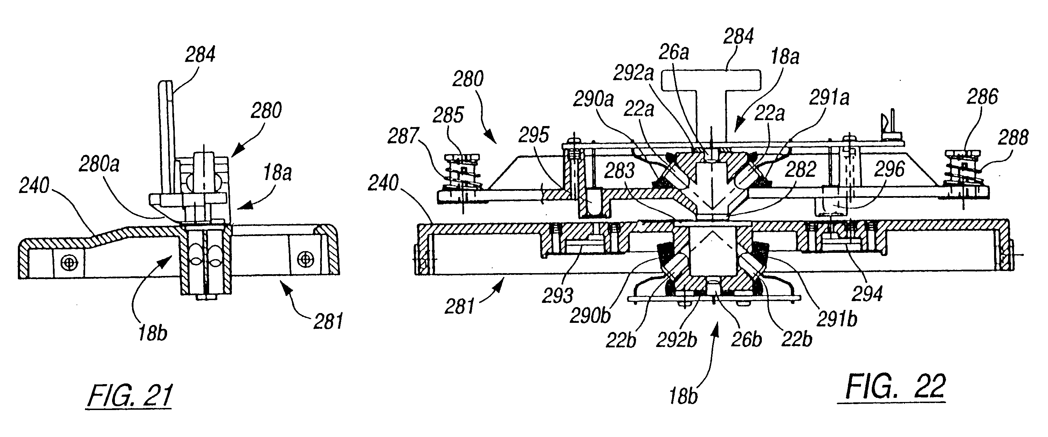

The upper and lower scanhead assemblies are shown most clearly in FIGs. 21-24. It can be seen that the housing for each scanhead is formed as an integral part of a unitary molded plastic support member 280 or 281 that also forms the housings for the light sources and photodetectors of the photosensors PS1 and PS2. The lower member 281 also forms the flat guide plate 240 that receives the bills from the drive roll 223 and supports the bills as they are driven past the scanheads 18a and 18b.

The two support members 280 and 281 are mounted facing each other so that the lenses 282 and 283 of the two scanheads 18a, 18b define a narrow gap through which each bill is transported. Similar, but slightly larger, gaps are formed by the opposed lenses of the light sources and photodetectors of the photosensors PS1 and PS2. The upper support member 280 includes a tapered entry guide 280a which guides an incoming bill into the gaps between the various pairs of opposed lenses.

The lower support member 281 is attached rigidly to the machine frame. The upper support member 280, however, is mounted for limited vertical movement when it is lifted manually by a handle 284, to facilitate the clearing of any paper jams that occur beneath the member 280. To allow for such vertical movement, the member 280 is slidably mounted on a pair of posts 285 and 286 on the machine frame, with a pair of springs 287 and 288 biasing the member 280 to its lowermost position.

Each of the two optical scanheads 18a and 18b housed in the support members 280, 281 includes a pair of light sources acting in combination to uniformly illuminate light strips of the desired dimension on opposite sides of a bill as it is transported across the plate 240. Thus, the upper scanhead 18a includes a pair of LEDs 22a, directing light downwardly through an optical mask on top of the lens 282 onto a bill traversing the flat guide plate 240 beneath the scanhead. The LEDs 22a are angularly disposed relative to the vertical axis of the scanhead so that their respective light beams combine to illuminate the desired light strip defined by an aperture in the mask. The scanhead 18a also includes a photodetector 26a mounted directly over the center of the illuminated strip for sensing the light reflected off the strip. The photodetector 26a is linked to the CPU 30 through the ADC 28 for processing the sensed data as described above.

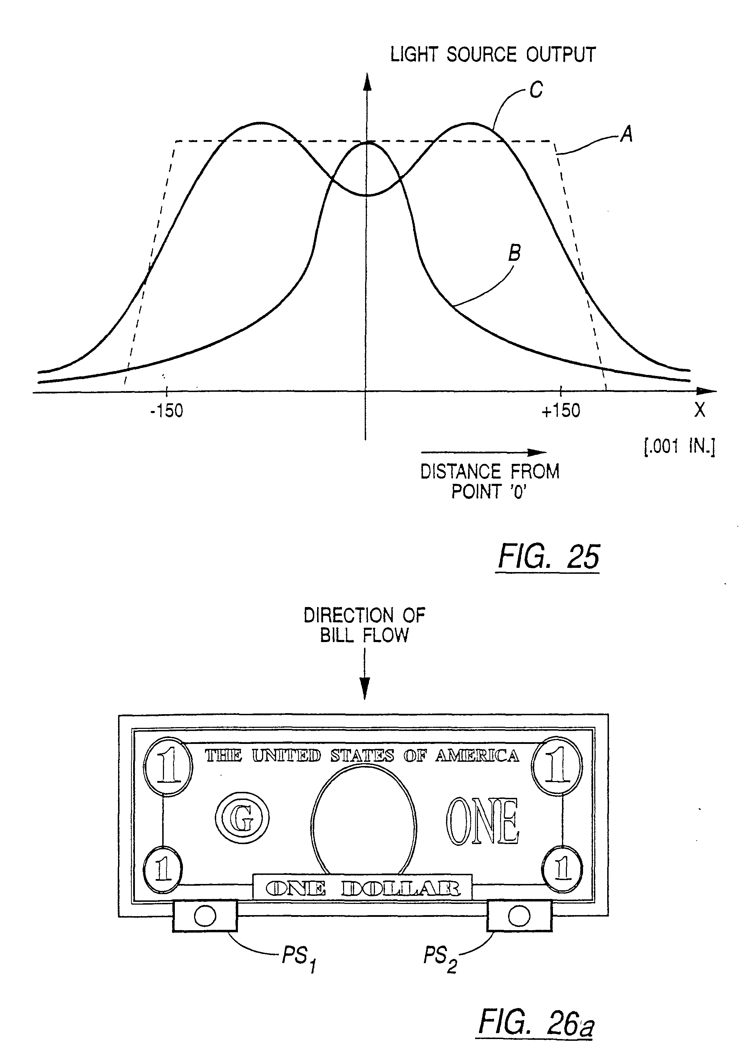

When the photodetector 26a is positioned on an axis passing through the center of the illuminated strip, the illumination by the LED's as a function of the distance from the central point "0" along the X axis, should optimally approximate a step function as illustrated by the curve A in FIG. 25. With the use of a single light source angularly displaced relative to a vertical axis through the center of the illuminated strip, the variation in illumination by an LED typically approximates a Gaussian function, as illustrated by the curve B in FIG. 25.

The two LEDs 22a are angularly disposed relative to the vertical axis by angles $\alpha$ and $\beta$, respectively. The angles $\alpha$ and $\beta$ are selected to be such that the resultant strip illumination by the LED's is as close as possible to the optimum distribution curve A in FIG. 25. The LED illumination distribution realized by this arrangement is illustrated by the curve designated as "C" in FIG. 25 which effectively merges the individual Gaussian distributions of each light source to yield a composite distribution which sufficiently approximates the optimum curve A.

In the particular embodiment of the scanheads 18a and 18b illustrated in the drawings, each scanhead includes two pairs of LEDs and two photodetectors for illuminating, and detecting light reflected from, strips of two different sizes. Thus, each mask also includes two slits which are formed to allow light from the LEDs to pass through and illuminate light strips of the desired dimensions. More specifically, one slit illuminates a relatively wide strip used for obtaining the reflectance samples which correspond to the characteristic pattern for a test bill. In a preferred embodiment, the wide slit has a length of about 0.500" and a width of about 0.050". The second slit forms a relatively narrow illuminated strip used for detecting the thin borderline surrounding the printed indicia on currency bills, as described above in detail. In a preferred embodiment, the narrow slit 283 has a length of about 0.300" and a width of about 0.010".

In order to prevent dust from fouling the operation of the scanheads, each scanhead includes three resilient seals or gaskets 290, 291, and 292. The two side seals 290 and 291 seal the outer ends of the LEDs 22, while the center seal 292 seals the outer end of the photodetector 26. Thus, dust cannot collect on either the light sources or the photodetectors, and cannot accumulate and block the slits through which light is transmitted from the sources to the bill, and from the bill to the photodetectors.

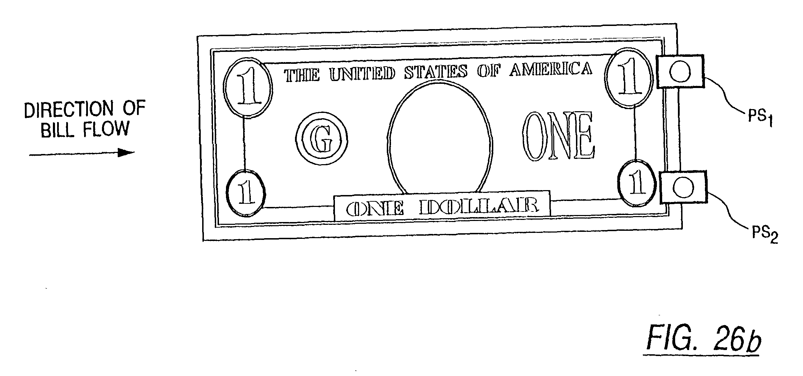

Doubling or overlapping of bills in the illustrative transport system is detected by two photosensors PS1 and PS2 which are located on a common transverse axis that is perpendicular to the direction of bill flow (see e.g., FIGs. 26a and 26b). The photosensors PS1 and PS2 include photodetectors 293 and 294 mounted within the lower support member 281 in immediate opposition to corresponding light sources 295 and 296 mounted in the upper support member 280. The photodetectors 293, 294 detect beams of light directed downwardly onto the bill transport path from the light sources 295, 296 and generate analog outputs which correspond to the sensed light passing through the bill. Each such output is converted into a digital signal by a conventional ADC convertor unit (not shown) whose output is fed as a digital input to and processed by the system CPU.

The presence of a bill adjacent the photosensors PS1 and PS2 causes a change in the intensity of the detected light, and the corresponding changes in the analog outputs of the photodetectors 293 and 294 serve as a convenient means for density-based measurements for detecting the presence of "doubles" (two or more overlaid or overlapped bills) during the currency scanning process. For instance, the photosensors may be used to collect a predefined number of density measurements on a test bill, and the average density value for a bill may be compared to predetermined density thresholds (based, for instance, on standardized density readings for master bills) to determine the presence of overlaid bills or doubles.

In order to prevent the accumulation of dirt on the light sources 295 and 296 and/or the photodetectors 293, 294 of the photosensors PS1 and PS2, both the light sources and the photodetectors are enclosed by lenses mounted so close to the bill path that they are continually wiped by the bills. This provides a self-cleaning action which reduces maintenance problems and improves the reliability of the outputs from the photosensors over long periods of operation.

The CPU 30, under control of software stored in the EPROM 34, monitors and controls the speed at which the bill transport mechanism 16 transports bills from the bill separating station 14 to the bill stacking unit. To execute more than the first step in any given routine, the currency discriminating system 10 must be operating in a mode requiring the execution of the routine.

Now that a currency scanner has been described in connection with scanning U.S. currency, an additional currency discrimination system of the present invention will be described.

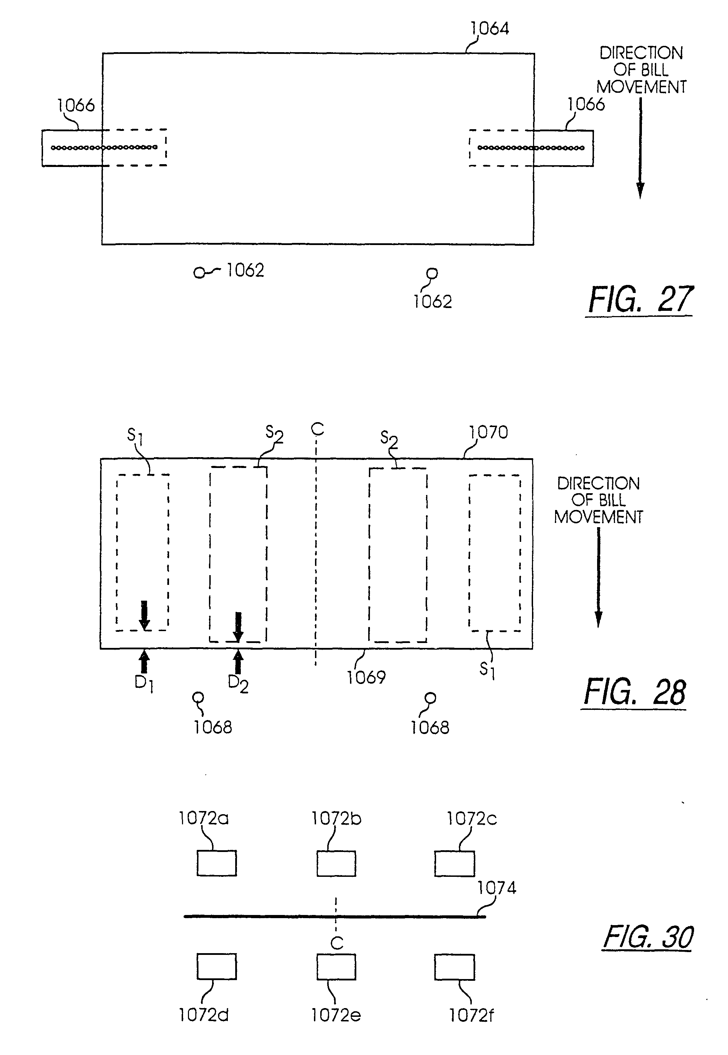

First of all, because currencies come in a variety of sizes, sensors are added to determine the size of a bill to be scanned. These sensors are placed upstream of the scanheads to be described below. A preferred embodiment of size determining sensors is illustrated in FIG. 27. Two leading/trailing edge sensors 1062 detect the leading and trailing edges of a bill 1064 as it passing along the transport path. These sensors in conjunction with the encoder 32 (FIG. 2) may be used to determine the dimension of the bill along a direction parallel to the scan direction which in FIG. 27 is the narrow dimension (or width) of the bill 1064. Additionally, two side edge sensors 1066 are used to detect the dimension of a bill 1064 transverse to the scan direction which in FIG. 27 is the wide dimension (or length) of the bill 1064. While the sensors 1062 and 1066 of FIG. 27 are optical sensors, other means of determining the size of a bill may be employed.

Once the size of a bill is determined, the potential identity of the bill is limited to those bills having the same size. Accordingly, the area to be scanned can be tailored to the area or areas best suited for identifying the denomination and country of origin of a bill having the measured dimensions.

Secondly, while the printed indicia on U.S. currency is enclosed within a thin borderline, the sensing of which may serve as a trigger to begin scanning using a wider slit, most currencies of other currency systems such as those from other countries do not have such a borderline. Thus the system described above may be modified to begin scanning relative to the edge of a bill for currencies lacking such a borderline. Referring to FIG. 28, two leading edge detectors 1068 are shown. The detection of the leading edge 1069 of a bill 1070 by leading edge sensors 1068 triggers scanning in an area a given distance away from the leading edge of the bill 1070, e.g., $D_1$ or $D_2$, which may vary depending upon the preliminary indication of the identity of a bill based on the dimensions of a bill. Alternatively, the leading edge 1069 of a bill may be detected by one or more of the scanheads (to be described below) in a similar manner as that described with respect to FIGs. 7 and 8. Alternatively, the beginning of scanning may be triggered by positional information provided by the encoder 32 of FIG. 2, for example, in conjunction with the signals provided by sensors 1062 of FIG. 27, thus eliminating the need for leading edge sensors 1068.

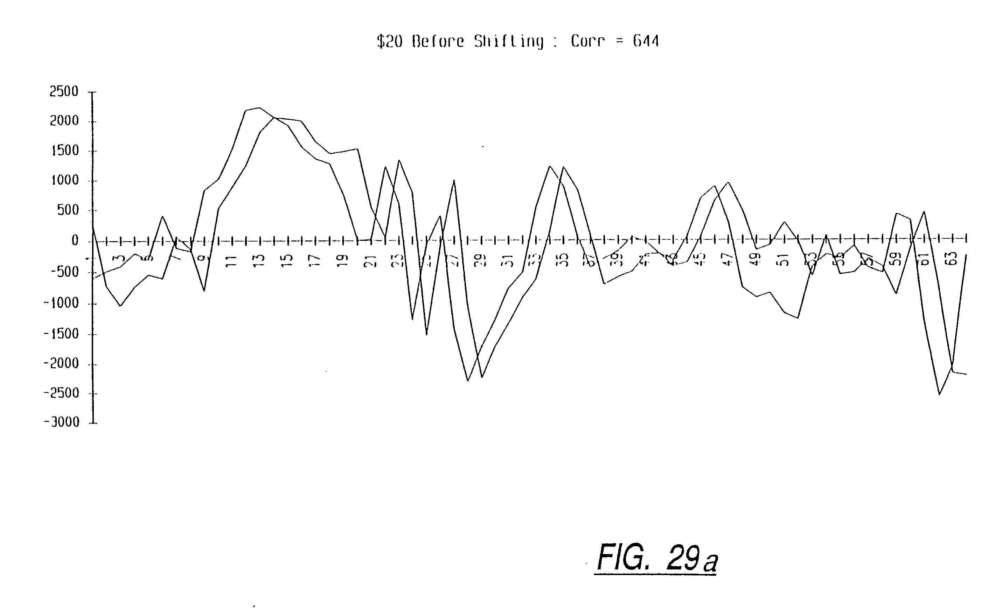

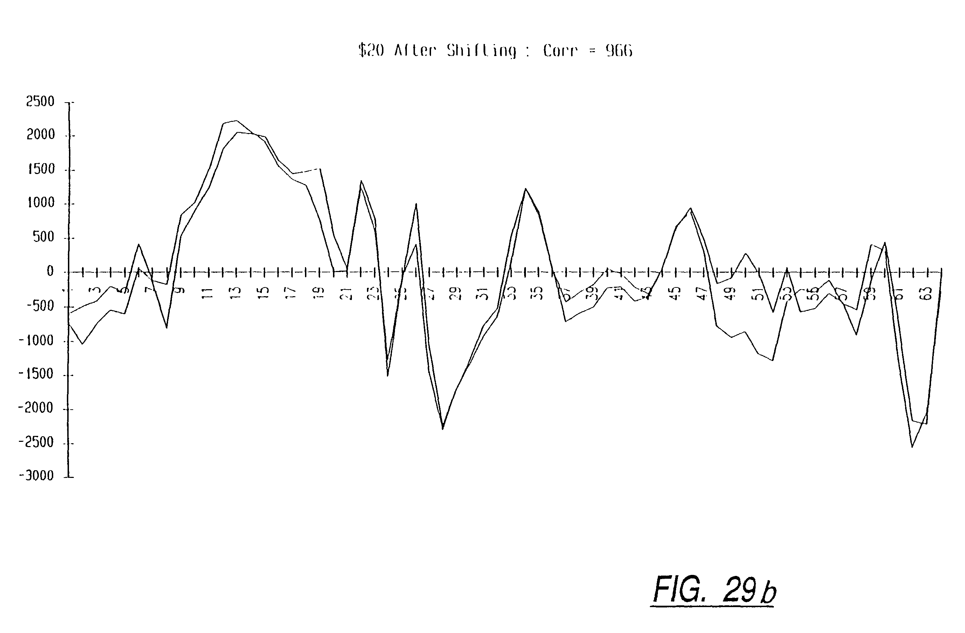

However, when the initiation of scanning is triggered by the detection of the leading edge of a bill, the chance that a scanned pattern will be offset relative to a corresponding master pattern increases. Offsets can result from the existence of manufacturing tolerances which permit the location of printed indicia of a document to vary relative to the edges of the document. For example, the printed indicia on U.S. bills may vary relative to the leading edge of a bill by as much as 50 mils which is 0.05 inches (1.27 mm). Thus when scanning is triggered relative to the edge of a bill (rather than the detection of a certain part of the printed indicia itself, such as the printed borderline of U.S. bills), a scanned pattern can be offset from a corresponding master pattern by one or more samples. Such offsets can lead to erroneous rejections of genuine bills due to poor correlation between scanned and master patterns. To compensate, overall scanned patterns and master patterns can be shifted relative to each other as illustrated in FIGs. 29a and 29b. More particularly, FIG. 29a illustrates a scanned pattern which is offset from a corresponding master pattern. FIG. 29b illustrates the same patterns after the scanned pattern is shifted relative to the master pattern, thereby increasing the correlation between the two patterns. Alternatively, instead of shifting either scanned patterns or master patterns, master patterns may be stored in memory corresponding to different offset amounts.

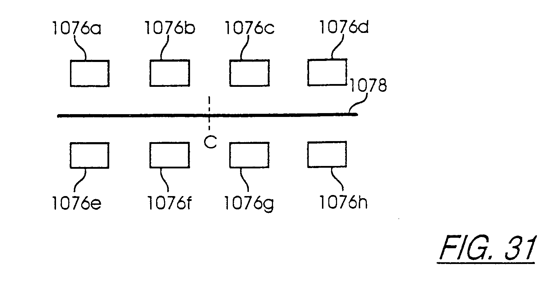

Thirdly, while it has been determined that the scanning of the central area on the green side of a U.S. bill (see segment S of FIG. 4) provides sufficiently distinct patterns to enable discrimination among the plurality of U.S. denominations, the central area may not be suitable for bills originating in other countries. For example, for bills originating from Country 1, it may be determined that segment $S_1$ (FIG. 28) provides a more preferable area to be scanned, while segment $S_2$ (FIG. 28) is more preferable for bills originating from Country 2. Alternatively, in order to sufficiently discriminate among a given set of bills, it may be necessary to scan bills which are potentially from such set along more than one segment, e.g., scanning a single bill along both $S_1$ and $S_2$. To accommodate scanning in areas other than the central portion of a bill, multiple scanheads may be positioned next to each other. A preferred embodiment of such a multiple scanhead system is depicted in FIG. 30. Multiple scanheads 1072a-c and 1072d-f are positioned next to each other along a direction lateral to the direction of bill movement. Such a system permits a bill 1074 to be scanned along different segments. Multiple scanheads 1072a-f are arranged on each side of the transport path, thus permitting both sides of a bill 1074 to be scanned.

Two-sided scanning may be used to permit bills to be fed into a currency discrimination system according to the present invention with either side face up. An example of a two-sided scanhead arrangement is described above in connection with FIGs. 2, 6c, and 6d. Master patterns generated by scanning genuine bills may be stored for segments on one or both sides. In the case where master patterns are stored from the scanning of only one side of a genuine bill, the patterns retrieved by scanning both sides of a bill under test may be compared to a master set of single-sided master patterns. In such a case, a pattern retrieved from one side of a bill under test should match one of the stored master patterns, while a pattern retrieved from the other side of the bill under test should not match one of the master patterns. Alternatively, master patterns may be stored for both sides of genuine bills. In such a two-sided system, a pattern retrieved by scanning one side of a bill under test should match with one of the master patterns of one side (Match 1) and a pattern retrieved from scanning the opposite side of a bill under test should match the master pattern associated with the opposite side of a genuine bill identified by Match 1.

Alternatively, in situations where the face orientation of a bill (i.e., whether a bill is "face up" or "face down") may be determined prior to or during characteristic pattern scanning, the number of comparisons may be reduced by limiting comparisons to patterns corresponding to the same side of a bill. That is, for example, when it is known that a bill is "face up", scanned patterns associated with scanheads above the transport path need only be compared to master patterns generated by scanning the "face" of genuine bills. By "face" of a bill it is meant a side which is designated as the front surface of the bill. For example, the front or "face" of a U.S. bill may be designated as the "black" surface while the back of a U.S. bill may be designated as the "green" surface. The face orientation may be determinable in some situations by sensing the color of the surfaces of a bill. An alternative method of determining the face orientation of U.S. bills by detecting the borderline on each side of a bill is described above in connection with FIGs. 6c, 6d, and 12. The implementation of color sensing is discussed in more detailed below.

According to the embodiment of FIG. 30, the bill transport mechanism operates in such a fashion that the central area C of a bill 1074 is transported between central scanheads 1072b and 1072e. Scanheads 1072a and 1072c and likewise scanheads 1072d and 1072f are displaced the same distance from central scanheads 1072b and 1072e, respectively. By symmetrically arranging the scanheads about the central region of a bill, a bill may be scanned in either direction, e.g., top edge first (forward direction) or bottom edge first (reverse direction). As described above with respect to FIGs. 1-8, master patterns are stored from the scanning of genuine bills in both the forward and reverse directions. While a symmetrical arrangement is preferred, it is not essential provided appropriate master patterns are stored for a non-symmetrical system.

While FIG. 29 illustrates a system having three scanheads per side, any number of scanheads per side may be utilized. Likewise, it is not necessary that there be a scanhead positioned over the central region of a bill. For example, FIG. 31 illustrates another preferred embodiment of the present invention capable of scanning the segments $S_1$ and $S_2$ of FIG. 28. Scanheads 1076a, 1076d, 1076e, and 1076h scan a bill 1078 along segment $S_1$ while scanheads 1076b, 1076c, 1076f, and 1076g scan segment $S_2$.

**Claims**

1. An apparatus for currency discrimination, comprising;

first and second stationary scanheads (18a,18b), disposed on opposite sides of a bill transport path, for scanning respective first and second opposing surfaces of each bill (17) of a plurality of bills (17) traveling downstream along said bill transport path and for producing output signals associated with said respective first and second surfaces of each bill (17), said bills traveling between said scanheads (18a,18b) in the direction of a predetermined dimension of said bills (17) at a rate in excess of about 800 bills per minute, each scanned bill having a primary characteristic pattern on one of said first and second surfaces and a secondary characteristic pattern on the other of said first and second surfaces;

a memory (34) for storing master primary characteristic patterns of a plurality of denominations of genuine bills; sampling means (30) for sampling said output signals associated with said respective first and second opposing surfaces of each scanned bill; and

signal processing means (30) for

(1) determining which surface of said first and second opposing surfaces of each scanned bill (17) includes said primary characteristic pattern in response to said first and second scanheads scanning portions of said first and second opposing surfaces of each bill (17), and

(2) in response to determining which surface of said first and second opposing surfaces of each scanned bill (17) includes said primary characteristic pattern to a predetermined degree of certainty, correlating only an output signal associated with said surface of each scanned bill (17) which includes said primary characteristic pattern with said master primary characteristic patterns to identify the denomination of each scanned bill (17).

2. The apparatus of claim 1, wherein said master primary characteristic patterns are on the green surfaces of United States currency bills.

3. The apparatus of claim 1 or claim 2, wherein said first and second scanheads (18a,18b) are optical scanheads each including at least one light source (22) for illuminating a strip (24) of a preselected segment (5) of a central portion of each bill (17), and at least one detector (26) for receiving reflected light from the illuminated strip (24) on each bill (17).

4. The apparatus according to any one of claims 1-3, wherein said first scanhead (18a) is disposed upstream relative to said second scanhead (18b) in the direction of said transport path.

5. The apparatus of claim 4, further including a bill transport mechanism (16) for transporting each bill (17) downstream along said transport path, and further including an encoder (32), linked to said bill transport mechanism, for generating a repetitive sequence of counts while each bill moves downstream along said transport path, and wherein the distance between said first and second scanheads in the direction of said transport path corresponds to a predetermined number of encoder counts.

6. The apparatus of claim 5, wherein said signal processing means (30)

   (1) retrieves a first encoder count in response to said first scanhead (18a) detecting a leading borderline (B1) of the printed image on said first surface of each bill (17),
   (2) retrieves a second encoder count in response to said second scanhead (18b) detecting a leading borderline (B2) of the printed image on said second surface of each bill (17),
   (3) determines the difference between said first and second encoder counts, and
   (4) compares said difference between said first and second encoder counts to said predetermined number.

7. The apparatus of claim 6, wherein said signal processing means (30) correlates said output signal associated with said second surface with said master primary characteristic patterns if said difference between said first and second encoder counts is greater than said predetermined number.

8. The apparatus of claim 6 or claim 7, wherein said signal processing means correlates said output signal associated with said first surface with said master primary characteristic patterns if said difference between said first and second encoder, counts is less than said predetermined number minus a relatively small safety value.

9. The apparatus of claim 8, wherein said signal processing means (30) correlates said output signals associated with said first and second surfaces with said master primary characteristic patterns if said difference between said first and second encoder counts is less than said predetermined number and greater than said predetermined number minus said safety value.

10. A method for currency discrimination, comprising:

   transporting a plurality of bills along a bill transport path between first and second stationary scanheads disposed on opposite sides of said transport path, said bills traveling downstream between said scanheads in the direction of a predetermined dimension of said bill at a rate in excess of about 800 bills per minute;
   scanning first and second opposing surfaces of each bill using said respective first and second scanheads as each bill travels downstream between said scanheads, and producing output signals associated therewith, each scanned bill having a primary characteristic pattern on one of said first and second surfaces and a secondary characteristic pattern on the other of said first and second surfaces;
   sampling said output signals associated with said respective first and second opposing surfaces of each scanned bill;
   storing master primary characteristic patterns of a plurality of denominations of genuine bills;
   determining which surface of said first and second opposing surfaces of each scanned billed includes said primary characteristic pattern in response to said first and second scanheads scanning portions of said first and second opposing surfaces of each bill; and

in response to determining which surface of said first and second opposing surfaces of each scanned bill includes said primary characteristic pattern to a predetermined degree of certainty, correlating only an output signal associated with said surface of each scanned bill which includes said primary characteristic pattern with said master primary characteristic patterns to identify the denomination of each scanned bill.

11. The method of claim 10, wherein said master primary characteristic patterns are on the green surfaces of United States currency bills.

12. The method of claim 10, wherein the step of transporting the plurality of bills along the transport path uses a bill transport mechanism, and further including the step of using an encoder, linked to the bill transport mechanism, to generate a repetitive sequence of counts while each bill moves downstream along said transport path, the distance between said first and second scanheads in the direction of said transport path corresponding to a predetermined number of encoder counts.

13. The method of claim 12, wherein said determining step includes:

(1) retrieving a first encoder count in response to said first scanhead detecting a leading borderline of the printed image on said first surface of each bill,

(2) retrieving a second encoder count in response to said second scanhead detecting a leading borderline of the printed image on said second surface of each bill,

(3) determining difference between said first and second encoder counts, and

(4) comparing said difference between said first and second encoder counts to said predetermined number.

14. The method of claim 13, wherein said correlating step includes correlating said output signal associated with said second surface with said master primary characteristic patterns if said difference between said first and second encoder counts is greater than said predetermined number.

15. The method of claim 14, wherein said correlating step includes correlating said output signal associated with said first surface with said master primary characteristic patterns if said difference between said first and second encoder counts is less than said predetermined number minus a relatively small safety value.

16. The method of claim 15, wherein said correlating step includes correlating said output signals associated with said first and second surfaces with said master primary characteristic patterns if said difference between said first and second encoder counts is less than said predetermined number and greater than said predetermined number minus said safety value.

**Patentansprüche**

1. Eine Vorrichtung zur Währungsunterscheidung mit:

Einem ersten und einem zweiten stationären Abtastkopf (18a, 18b), die auf gegenüberliegenden Seiten eines Banknotentransportweges angeordnet sind zum Abtasten einer entsprechenden ersten und einer entsprechenden zweiten gegenüberliegenden Oberfläche jeder Banknote (17) von einer Mehrzahl von Banknoten (17), die sich entlang des Banknotentransportweges stromabwärts bewegen, und zum Erzeugen eines Ausgangssignals, das mit der entsprechenden ersten und entsprechenden zweiten Oberfläche jeder Banknote (17) verknüpft ist, wobei sich die Banknoten zwischen den Abtastköpfen (18a, 18b) in der Richtung einer vorbestimmten Dimension der Banknoten (17) mit einer Geschwindigkeit von über ungefähr 800 Banknoten pro Minute bewegen, jede abgetastete Banknote ein Hauptcharakteristikmuster auf einer ersten oder zweiten Oberfläche und ein Sekundärcharakteristikmuster auf der jeweils anderen, entweder ersten oder zweiten Oberfläche aufweist;

einem Speicher (34) zum Speichern von Vergleichshauptcharakteristikmustern von mehreren Nennwerten von echten Banknoten;

EP 0 749 611 B1

einer Abfrageeinrichtung (30) zum Abfragen der Ausgangssignale, die mit den entsprechenden ersten und entsprechenden zweiten gegenüberliegenden Oberfläche jeder abgetasteten Banknote verknüpft sind; und

einer Signalverarbeitungseinrichtung (30) zum

(1) Bestimmen, welche Oberfläche, die erste und zweite gegenüberliegende Oberfläche, jeder abgetasteten Banknote (17) das Hauptcharakteristikmuster in Bezug auf den ersten und zweiten Abtastkopfabtastbereich der ersten und zweiten gegenüberliegenden Oberfläche jeder Banknote (17) umfasst, und (2) aufgrund des Bestimmens, welche Oberfläche, die erste und zweite Oberfläche, von jeder abgetasteten Banknote (17) das Hauptcharakteristikmuster mit einem vorbestimmten Sicherheitsgrad umfasst, erfolgt ausschließliches Korrelieren eines Ausgangssignals, das mit der Oberfläche jeder abgetasteten Banknote (17), welche das Hauptcharakteristikmuster umfasst, verknüpft ist, mit den Vergleichshauptcharakteristikmustem, um den Nennwert jeder abgetasteten Banknote (17) zu identifizieren.

2. Die Vorrichtung gemäß Anspruch 1, worin die Vergleichshauptcharakteristikmuster auf den grünen Oberflächen der Banknoten der Vereinigten Staaten sind.

3. Die Vorrichtung von Anspruch 1 oder Anspruch 2, worin der erste und zweite Abtastkopf (18a, 18b) optische Abtastköpfe sind, von denen jeder zumindest eine Lichtquelle (22) zum Beleuchten eines Streifens (24) eines vorausgewählten Segments (S) eines mittigen Bereichs jeder Banknote (17) und mindestens einen Detektor (26) zum Empfangen von reflektiertem Licht von dem beleuchteten Streifen (24) auf jeder Banknote (17) umfasst.

4. Die Vorrichtung gemäß einem der Ansprüche 1 - 3, worin der erste Abtastkopf (18a) stromaufwärts relativ zu dem zweiten Abtastkopf (18b) in Richtung des Transportwegs angeordnet ist.

5. Die Vorrichtung gemäß Anspruch 4, die weiter einen Banknotentransportmechanismus (16) zum Transportieren jeder Banknote (17) stromabwärts entlang des Transportwegs umfasst und weiter einen Enkoder (32) umfasst, der mit dem Banknotentransportmechanismus zum Erzeugen einer sich wiederholenden Sequenz von Zählungen gekoppelt ist, während sich jede Banknote stromabwärts entlang des Transportweges bewegt, und wobei der Abstand zwischen dem ersten und zweiten Abtastkopf in der Richtung des Transportwegs zu einer vorbestimmten Anzahl der Enkoderzählungen korrespondiert.

6. Die Vorrichtung gemäß Anspruch 5, worin die Signalverarbeitungseinrichtung (30),

(1) eine erste Enkoderzählung aufgrund des Ermittelns einer führenden Grenzlinie (B1) des gedruckten Bildes auf der ersten Oberfläche jeder Banknote (17) durch den ersten Abtastkopf (18a) entnimmt,

(2) eine zweite Enkoderzählung aufgrund des Ermittelns einer führenden Grenzlinie (B2) eines gedruckten Bildes auf einer zweiten Oberfläche jeder Banknote (17) durch den zweiten Abtastkopf (18b) entnimmt,

(3) den Unterschied zwischen der ersten und zweiten Enkoderzählung bestimmt und

(4) der Unterschied zwischen der ersten und zweiten Enkoderzählung mit einer vorbestimmten Anzahl vergleicht.

7. Die Vorrichtung gemäß Anspruch 6, worin die Signalverarbeitungseinrichtung (30) das Ausgangssignal, welches mit der zweiten Oberfläche verknüpft ist, mit den Vergleichshauptcharakteristikmustem korreliert, ob der Unterschied zwischen der ersten und zweiten Enkoderzählung größer ist, als die vorbestimmte Anzahl.

8. Die Vorrichtung gemäß Anspruch 6 oder 7, worin die Signalverarbeitungseinrichtung das Ausgangssignals, das mit der ersten Oberfläche geknüpft ist, mit den Vergleichshauptcharakteristikmustem korreliert, ob der Unterschied zwischen der ersten und zweiten Enkoderzählung geringer ist, als eine vorbestimmte Anzahl minus eines relativ kleinen Sicherheitswerts.

9. Die Vorrichtung gemäß Anspruch 8, worin die Signalverarbeitungseinrichtung (30) die Ausgangssignale, die mit der ersten und zweiten Oberfläche verknüpft sind, mit den Vergleichshauptcharakteristikmustern korreliert, ob der Unterschied zwischen der ersten und zweiten Enkoderzählung geringer ist, als eine vorbestimmte Anzahl, und größer ist, als eine vorbestimmte Anzahl minus dem Sicherheitswert.

21

**10.** Ein Verfahren zur Währungsunterscheidung, mit:

Transportieren von mehreren Banknoten entlang eines Banknotentransportweges zwischen einem ersten und einem zweiten stationären Abtastkopf, die auf gegenüberliegenden Seiten des Transportweges angeordnet sind, wobei sich die Banknoten stromabwärts zwischen den Abtastköpfen in Richtung einer vorbestimmten Abmessung der Banknote mit einer Geschwindigkeit von mehr als ungefähr 800 Banknoten pro Minute bewegen;

Abfragen einer ersten und zweiten gegenüberliegenden Oberfläche jeder Banknote mittels Verwenden des entsprechenden ersten und zweiten Abtastkopfs, wenn jede der Banknote sich stromabwärts zwischen den Abtastköpfen bewegt, und Erzeugen von Ausgangssignalen, die hiermit verknüpft sind, wobei jede abgetastete Banknote ein Hauptcharakteristikmuster auf der ersten oder zweiten Oberfläche und ein Sekundärcharakteristikmuster auf der anderen, entweder ersten oder zweiten Oberfläche aufweist;

Abfragen der Ausgangssignale, die mit den entsprechenden ersten und zweiten gegenüberliegenden Oberflächen jeder abgetasteten Banknote verknüpft sind;

Abspeichern von Vergleichshauptcharakteristikmustem von mehreren Nennwerten von echten Banknoten;

Bestimmen, welche Oberfläche, die erste und zweite gegenüberliegende Oberfläche, jeder abgetasteten Banknote das Hauptcharakteristikmuster in Bezug des ersten und zweiten Abtastkopfabtastbereichs auf der ersten und zweiten gegenüberliegenden Oberfläche jeder Banknote umfasst; und

aufgrund des Bestimmens, welche Oberfläche, die erste und zweite gegenüberliegende Oberfläche, von jeder abgetasteten Banknote das Hauptcharakteristikmuster mit einem vorbestimmten Wahrscheinlichkeitsgrad umfasst, erfolgt Korrelieren nur

' eines Ausgangssignals, das mit der Oberfläche von jeder abgetasteten Banknote verknüpft ist, welche das Hauptcharakteristikmuster umfasst, mit den Vergleichshauptcharakteristikmustem, um den Nennwert jeder abgetasteten Banknote zu identifizieren.

**11.** Das Verfahren gemäß Anspruch 10, worin die Vergleichshauptcharakteristikmuster auf der grünen Oberfläche von Banknoten der Vereinigten Staaten sind.

**12.** Das Verfahren gemäß Anspruch 10, worin der Schritt des Transportierens der mehreren Banknoten entlang des Transportweges einen Banknotentransportmechanismus verwendet und weiter den Schritt des Verwendens eines Enkoders umfasst, der mit dem Banknotentransportmechanismus gekoppelt ist, um eine sich wiederholende Sequenz von Zählungen zu erzeugen, während sich jede Banknote stromabwärts entlang des Transportweges bewegt, wobei der Abstand zwischen dem ersten und zweiten Abtastkopf in der Richtung des Transportweges mit einer vorbestimmten Anzahl von Enkoderzählungen korrespondiert.

**13.** Das Verfahren gemäß Anspruch 12, worin der vorbestimmte Schritt umfasst:

(1) Entnehmen einer ersten Enkoderzählung aufgrund des Ermittelns einer führenden Grenzlinie des gedruckten Bildes auf der ersten Oberfläche jeder Banknote durch den ersten Abtastkopf,

(2) Entnehmen einer zweiten Enkoderzählung aufgrund des Ermittelns einer führenden Grenzlinie des gedruckten Bildes auf der zweiten Oberfläche jeder Banknote durch den zweiten Abtastkopf,

(3) Bestimmen eines Unterschiedes zwischen der ersten und zweiten Enkoderzählung und

(4) Vergleichen des Unterschieds zwischen der ersten und zweiten Enkoderzählung mit einer vorbestimmten Zahl.

**14.** Das Verfahren gemäß Anspruch 13, worin der Korrelationsschritt das Korrelieren des Ausgangssignals, das mit der zweiten Oberfläche verknüpft ist, mit den Vergleichshauptcharakteristikmustem, ob der Unterschied zwischen der ersten und zweiten Enkoderzählung größer ist, als eine vorbestimmte Anzahl, umfasst.

**15.** Das Verfahren gemäß Anspruch 14, worin der Korrelationsschritt das Korrelieren des Ausgangssignals, das mit der ersten Oberfläche verknüpft ist, mit den ersten Vergleichshauptcharakteristikmustem, ob der Unterschied zwischen der ersten und zweiten Enkoderzählung geringer ist, als eine vorbestimmte Anzahl minus eines relativ kleinen Sicherheitswerts, umfasst.

**16.** Das Verfahren gemäß Anspruch 15, worin der Korrelationsschritt das Korrelieren der Ausgangssignale, die mit der ersten und zweiten Oberfläche verknüpft sind, mit den Vergleichshauptcharakteristikmustem, ob der Unterschied zwischen der ersten und zweiten Enkoderzählung geringer ist, als eine vorbestimmte Anzahl und größer ist, als die vorbestimmte Anzahl minus einem Sicherheitswert, umfasst.

**Revendications**

**1.** Dispositif de distinction d'unités monétaires, comprenant :

des première et seconde têtes de balayage fixes (18a, 18b), disposées sur des côtés opposés d'un trajet d'acheminement de billets de banque, destinées à balayer des première et seconde surfaces opposées respectives de chaque billet de banque (17) d'une pluralité de billets de banque (17) se déplaçant en aval le long dudit trajet d'acheminement de billets de banque, et à produire des signaux de sortie associés auxdites première et seconde surfaces respectives de chaque billet de banque (17), lesdits billets de banque se déplaçant entre lesdites têtes de balayage (18a, 18b) suivant la direction d'une dimension prédéterminée desdits billets de banque (17), à une cadence dépassant environ 800 billets de banque par minute, chaque billet de banque balayé présentant une configuration caractéristique principale sur l'une desdites première et seconde surfaces et une configuration caractéristique secondaire sur l'autre desdites première et seconde surfaces ;
une mémoire (34) destinée à mémoriser des configurations caractéristiques principales étalons d'une pluralité de dénominations de billets de banque authentiques ;
des moyens d'échantillonnage (30) destinés à échantillonner lesdits signaux de sortie associés auxdites première et seconde surfaces opposées respectives de chaque billet de banque balayé ; et
des moyens de traitement de signal (30) destinés

(1) à déterminer la surface, parmi lesdites première et seconde surfaces opposées de chaque billet de banque balayé (17), qui inclut ladite configuration caractéristique principale en réponse auxdites première et seconde têtes de balayage balayant des parties desdites première et seconde surfaces opposées de chaque billet de banque (17), et
(2) en réponse à la détermination de la surface, parmi lesdites première et seconde surfaces opposées de chaque billet de banque balayé (17), qui inclut ladite configuration caractéristique principale jusqu'à un degré prédéterminé de certitude, à corréler uniquement un signal de sortie associé à ladite surface de chaque billet de banque balayé (17) incluant ladite configuration caractéristique principale avec lesdites configurations caractéristiques principales étalons de manière à identifier la dénomination de chaque billet de banque balayé (17).

**2.** Dispositif selon la revendication 1, dans lequel lesdites configurations caractéristiques principales étalons se trouvent sur les surfaces vertes des billets de banque d'unité monétaire des Etats-Unis d'Amérique:

**3.** Dispositif selon la revendication 1 ou 2, dans lequel lesdites première et seconde têtes de balayage (18a, 18b) sont des têtes de balayage optiques incluant chacune au moins une source de lumière (22) destinée à illuminer une bande (24) d'un segment présélectionné (5) d'une partie centrale de chaque billet de banque (17), et au moins un détecteur (26) destiné à recevoir la lumière réfléchie issue de la bande illuminée (24) sur chaque billet de banque (17).

**4.** Dispositif selon l'une quelconque des revendications 1 à 3, dans lequel ladite première tête de balayage (18a) est disposée en amont de ladite seconde tête de balayage (18b) suivant la direction dudit trajet d'acheminement.

**5.** Dispositif selon la revendication 4, incluant, en outre, un mécanisme d'acheminement de billets de banque (16) destiné à acheminer chaque billet de banque (17) en aval le long dudit trajet d'acheminement, et incluant, en outre, un codeur (32), relié audit mécanisme d'acheminement de billets de banque, destiné à générer une séquence répétitive de comptages alors que chaque billet de banque se déplace en aval le long dudit trajet d'acheminement, et dans lequel la distance séparant lesdites première et seconde têtes de balayage suivant la direction dudit trajet d'acheminement correspond à un nombre prédéterminé de comptages de codeur.

**6.** Dispositif selon la revendication 5, dans lequel lesdits moyens de traitement de signal (30)

(1) extraient un premier comptage de codeur en réponse à ladite première tête de balayage (18a) détectant une ligne d'encadrement avant (B1) de l'image imprimée sur ladite première surface de chaque billet de banque (17),
(2) extraient un second comptage de codeur en réponse à ladite seconde tête de balayage (18b) détectant une ligne d'encadrement avant (B2) de l'image imprimée sur ladite seconde surface de chaque billet de banque (17),
(3) déterminent la différence entre lesdits premier et second comptages de codeur, et
(4) comparent ladite différence entre lesdits premier et second comptages de codeur audit nombre prédéterminé.

**7.** Dispositif selon la revendication 6, dans lequel lesdits moyens de traitement de signal (30) corrèlent ledit signal de sortie associé à ladite seconde surface avec lesdites configurations caractéristiques principales étalons lorsque ladite différence entre lesdits premier et second comptages de codeur est supérieure audit nombre prédéterminé.

**8.** Dispositif selon la revendication 6 ou 7, dans lequel lesdits moyens de traitement de signal (30) corrèlent ledit signal de sortie associé à ladite première surface avec lesdites configurations caractéristiques principales étalons lorsque ladite différence entre lesdits premier et second comptages de codeur est inférieure audit nombre prédéterminé duquel est soustraite une valeur de sécurité relativement faible.

**9.** Dispositif selon la revendication 8, dans lequel lesdits moyens de traitement de signal (30) corrèlent lesdits signaux de sortie associés auxdites première et seconde surfaces avec lesdites configurations caractéristiques principales étalons lorsque ladite différence entre lesdits premier et second comptages de codeur est inférieure audit nombre prédéterminé et est supérieure audit nombre prédéterminé duquel est soustraite une valeur de sécurité relativement faible.

**10.** Procédé de distinction d'unités monétaires, comprenant :

l'acheminement d'une pluralité de billets de banque le long d'un trajet d'acheminement de billets de banque entre des première et seconde têtes de balayage fixes disposées sur des côtés opposés dudit trajet d'acheminement, lesdits billets de banque se déplaçant en aval entre lesdites têtes de balayage suivant la direction d'une dimension prédéterminée dudit billet de banque, à une cadence dépassant environ 800 billets de banque par minute ;
le balayage des première et seconde surfaces opposées de chaque billet de banque en utilisant lesdites première et seconde têtes de balayage respectives alors que chaque billet de banque se déplace en aval entre lesdites têtes de balayage, et la production de signaux de sortie qui leur sont associés, chaque billet de banque balayé présentant une configuration caractéristique principale sur l'une desdites première et seconde surfaces et une configuration caractéristique secondaire sur l'autre desdites première et seconde surfaces ;
l'échantillonnage desdits signaux de sortie associés auxdites première et seconde surfaces opposées respectives de chaque billet de banque balayé ;
la mémorisation de configurations caractéristiques principales étalons d'une pluralité de dénominations de billets de banque authentiques ;
la détermination de la surface, parmi lesdites première et seconde surfaces opposées de chaque billet de banque balayé (17), qui inclut ladite configuration caractéristique principale en réponse auxdites première et seconde têtes de balayage balayant des parties desdites première et seconde surfaces opposées de chaque billet de banque ; et
en réponse à la détermination de la surface, parmi lesdites première et seconde surfaces opposées de chaque billet de banque balayé, qui inclut ladite configuration caractéristique principale jusqu'à un degré prédéterminé de certitude, la corrélation uniquement d'un signal de sortie associé à ladite surface de chaque billet de banque balayé qui inclut ladite configuration caractéristique principale avec lesdites configurations caractéristiques principales étalons de manière à identifier la dénomination de chaque billet de banque balayé.

**11.** Procédé selon la revendication 10, dans lequel lesdites configurations caractéristiques principales étalons se trouvent sur les surfaces vertes des billets de banque d'unité monétaire des Etats-Unis d'Amérique.

**12.** Procédé selon la revendication 10, dans lequel l'étape consistant à acheminer la pluralité de billets de banque le long du trajet d'acheminement utilise un mécanisme d'acheminement de billets de banque et inclut, en outre, l'étape consistant à utiliser un codeur, relié au mécanisme d'acheminement de billets de banque, de manière à générer une séquence répétitive de comptages alors que chaque billet de banque se déplace en aval le long dudit trajet d'acheminement, la distance séparant lesdites première et seconde têtes de balayage suivant la direction dudit trajet d'acheminement correspondant à un nombre prédéterminé de comptages de codeur.

**13.** Procédé selon la revendication 12, dans lequel ladite étape de détermination inclut :

(1) l'extraction d'un premier comptage de codeur en réponse à ladite première tête de balayage détectant une ligne d'encadrement avant de l'image imprimée sur ladite première surface de chaque billet de banque,
(2) l'extraction d'un second comptage de codeur en réponse à ladite seconde tête de balayage détectant une ligne d'encadrement avant de l'image imprimée sur ladite seconde surface de chaque billet de banque,
(3) la détermination d'une différence entre lesdits premier et second comptages de codeur, et
(4) la comparaison de ladite différence entre lesdits premier et second comptages de codeur avec ledit nombre prédéterminé.

**14.** Procédé selon la revendication 13, dans lequel ladite étape de corrélation inclut la corrélation dudit signal de sortie associé à ladite seconde surface avec lesdites configurations caractéristiques principales étalons lorsque ladite différence entre lesdits premier et second comptages de codeur est supérieure audit nombre prédéterminé.

**15.** Procédé selon la revendication 14, dans lequel ladite étape de corrélation inclut la corrélation dudit signal de sortie associé à ladite première surface avec lesdites configurations caractéristiques principales étalons lorsque ladite différence entre lesdits premier et second comptages de codeur est inférieure audit nombre prédéterminé duquel est soustraite une valeur de sécurité relativement faible.

**16.** Procédé selon la revendication 15, dans lequel ladite étape de corrélation inclut la corrélation desdits signaux de sortie associés auxdites première et seconde surfaces avec lesdites configurations caractéristiques principales étalons lorsque ladite différence entre lesdits premier et second comptages de codeur est inférieure audit nombre prédéterminé et est supérieure audit nombre prédéterminé duquel est soustraite une valeur de sécurité relativement faible.

*FIG. 1*

*FIG. 2*

*FIG. 3*

*FIG. 4a*

*FIG. 5a*

D

17a

17

S

FIG. 4b

.058

.029

S1

S63

S2

S64

FIG. 5b

_FIG. 6a_

_FIG. 6b_

FIG. 6c

DIRECTION OF BILL FLOW

FIG. 6d

DIRECTION OF BILL FLOW

FIG. 7

FIG. 8

EP 0 749 611 B1

START LOWER
READ HEAD FINE
LINE INTERRUPT — 70

SAVE ENCODER
COUNT FOR GREEN
VS. BLACK
SIDE DETECTION — 71

DISABLE
LOWER READ HEAD
FINE LINE
INTERRUPT — 72

DONE
WITH MAGNETIC
SAMPLING OF
PREVIOUS
BILL ? — 73

YES

NO

SAVE MAGNETIC TOTAL
FOR PREVIOUS BILL — 74

SET
MAGNETIC SAMPLING
DONE FLAG — 75

SET LOWER READ
HEAD BIT IN
TRIGGER FLAG — 76

INITIALIZE
MAGNETIC SAMPLER — 77

ENABLE
MAGNETIC SAMPLING
INTERRUPT — 78

INTIALIZE
DENSITY
SAMPLER — 79

ENABLE
DENSITY SAMPLING
INTERRUPT — 80

INITIALIZE
LOWER READ HEAD
DATA SAMPLER — 81

ENABLE
LOWER READ HEAD
DATA SAMPLING
INTERRUPT — 82

RESET
LOWER READ HEAD
FINE LINE
INTERRUPT FLAG — 83

RETURN
FROM INTERRUPT — 84

*FIG. 9*

START UPPER
READ HEAD FINE
LINE INTERRUPT — 85

SAVE ENCODER
COUNT FOR
GREEN VS. BLACK
SIDE DETECTION — 86

DISABLE
UPPER READ HEAD
FINE LINE
INTERRUPT — 87

SET UPPER READ
HEAD BIT IN
TRIGGER FLAG — 88

INITIALIZE
UPPER READ HEAD
DATA SAMPLER — 89

ENABLE
UPPER READ HEAD
DATA SAMPLING
INTERRUPT — 90

RESET
UPPER READ HEAD
FINE LINE
INTERRUPT FLAG — 91

RETURN
FROM INTERRUPT — 92

*FIG. 10*

START LOWER
READ HEAD
INTERRUPT — 93a

↓

DECREMENT
SAMPLE
POINTER — 94a

↓

READ A/D
RESULT — 95a

↓

CONVERT
SAMPLE TO
10 BITS — 96a

↓

STORE SAMPLE
IN $X_{IN-L}$ — 97a

↓

ALL N
SAMPLES
OBTAINED ? — 98a

NO ←

YES ↓

ARM INTERRUPT
FOR NEXT
SAMPLE TIME — 99a

↓

RETURN FROM
INTERRUPT — 100a

SET LOWER READ HEAD
DONE FLAG BIT — 101a

↓

RETURN FROM
INTERRUPT — 102a

*FIG. 11a*

START UPPER
READ HEAD
INTERRUPT — 93b

DECREMENT
SAMPLE
POINTER — 94b

READ A/D
RESULT — 95b

CONVERT
SAMPLE TO
10 BITS — 96b

STORE SAMPLE
IN $X_{IN-U}$ — 97b

ALL N
SAMPLES
OBTAINED ? — 98b

NO

YES

ARM INTERRUPT
FOR NEXT
SAMPLE TIME — 99b

SET UPPER READ HEAD
DONE FLAG BIT — 101b

RETURN FROM
INTERRUPT — 100b

RETURN FROM
INTERRUPT — 102b

*FIG. 11b*

36

START — 105

SUBTRACT UPPER FINE LINE COUNT FROM LOWER FINE LINE COUNT — 105a

GREATER THAN READ HEADS OFFSET PLUS X ? — 106

YES → SET CORRELATE LOWER READ HEAD DATA ONLY FLAG — 107

NO

LESS THAN OFFSET MINUS X ? — 108

YES

NO

CORRELATE LOWER READ HEAD DATA — 109

CORRELATE LOWER READ DATA ONLY ? — 110

YES

NO

CORRELATE UPPER READ HEAD DATA — 111

BI-LEVEL THRESHOLD CHECK — 112

END — 113

*FIG. 12*

FIG. 13

EP 0 749 611 B1

START — 170

FINISH BILL
# 1 PROCESSING — 171

DOES AN
ERROR CONDITION
EXIST ? — 172

NO

YES

SLOW DOWN
TRANSPORT MOTOR — 174

LAST
SAMPLE TAKEN ON
BILL # 2 ? — 175

NO

NEXT
BILL TIMEOUT ? — 176

NO

YES

YES

EITHER
DENSITY SENSOR
COVERED ? — 178

YES

NO

STOP TRANSPORT
MOTOR — 179

RETURN — 173

*FIG. 14*

$1 : TOP, FORWARD

SAMPLES

( THOUSANDS )

FIG. 15a

$2 : TOP, REVERSE

( THOUSANDS )

SAMPLES

EP 0 749 611 B1

*FIG. 15b*

$100 : TOP, FORWARD

FIG. 15c

EP 0 749 611 B1

FIG. 16a

43

EP 0 749 611 B1

_FIG. 16b_

_FIG. 17a_

EP 0 749 611 B1

*FIG. 17b*

FIG. 18

*FIG. 19*

EP 0 749 611 B1

*FIG. 20*

EP 0 749 611 B1

EP 0 749 611 B1

*FIG. 21*

*FIG. 22*

FIG. 23

EP 0 749 611 B1

FIG. 24

LIGHT SOURCE OUTPUT

*C*

*A*

*B*

-150

+150

X

[.001 IN.]

DISTANCE FROM
POINT '0'

*FIG. 25*

DIRECTION OF
BILL FLOW

THE UNITED STATES OF AMERICA

1    1

G    ONE

1    1

ONE DOLLAR

PS₁    PS₂

*PS_1*    *PS_2*

*FIG. 26a*

DIRECTION OF
BILL FLOW
→

THE UNITED STATES OF AMERICA

G

ONE

ONE DOLLAR

PS$_1$

PS$_2$

FIG. 26b

EP 0 749 611 B1

FIG. 27

FIG. 28

FIG. 30

$20 Before Shifting : Corr = 644

FIG. 29a

$20 After Shifting : Corr = 966

FIG. 29 b

1076a     1076b     1076c     1076d

1078

C

1076e     1076f     1076g     1076h

*FIG. 31*